# EUROPEAN PATENT APPLICATION

(11) **EP 2 882 016 A1**
(43) Date of publication of application: **10.06.2015**
(21) Application number: 13825688.8
(22) Date of filing: 01.08.2013
(51) Int. Cl.: H01M 4/90, B01J 27/24, C09D 11/00, H01M 4/88, H01M 4/96, H01M 8/10

(54) **CELL CATALYST COMPOSITION, PRODUCTION METHOD THEREFOR, ELECTRODE MATERIAL, AND FUEL CELL**

(30) Priority: 01.08.2012 JP 2012170875; 15.04.2013 JP 2013084598
(71) Applicant: Toyo Ink SC Holdings Co., Ltd., Chuo-ku, Tokyo 104-8377 (JP)
(72) Inventor: KANEDA, Jun, Tokyo 104-8377 (JP); WATANABE, Hiroto, Tokyo 104-8377 (JP); DEGUCHI, Naoki, Tokyo 104-8377 (JP)
(74) Representative: Pfenning, Meinig & Partner GbR
(86) International application number: PCT/JP2013/004681
(87) International publication number: WO 2014/020915

(57) **Abstract**

A cell catalyst composition according to the present invention includes a carbon catalyst granule and a binder resin, and at least a part of the binder resin includes a resin (B) including a hydrophilic functional group. The carbon catalyst granule is (i) a carbon catalyst granule wherein carbon catalyst (A) particles are bound to each other by using at least the resin (B), or/and (ii) a carbon catalyst granule wherein carbon catalyst (A) particles form a sintered body and are thereby bound to each other. The carbon catalyst (A) includes a carbon element, a nitrogen element, and a base metal element as constituent elements. Further, an average particle diameter of the carbon catalyst granule is 0.5 to 100 µm, and a sphericity of the carbon catalyst granule is equal to or greater than 0.5.

## Description

### Technical Field

The present invention relates to a cell catalyst composition and manufacturing method thereof. Further, the present invention also relates to an electrode material and a fuel cell.

### Background Art

In various electrochemical devices such as polymer electrolyte fuel cells and water electrolysis devices, a solid polymer electrolyte is formed into a membrane and used in the form of a membrane electrode assembly (MEA) in which electrodes are bonded on both surfaces of the membrane. An electrode of a polymer electrolyte fuel cell usually has a two-layer structure consisting of a gaseous diffusion layer and an electrode catalyst layer. The gaseous diffusion layer serves for supplying a reactive gas and electrons to the electrode catalyst layer, and is formed from carbon fibers, carbon paper, or the like. Meanwhile, the electrode catalyst layer functions as a reaction field for the electrode reaction and is usually bonded to the solid polymer electrolyte.

For electrode catalysts used in such various electrochemical devices, noble metal fine particles such as platinum particles, carbon particle supports such as carbon black with noble metal particles such as platinum particles supported thereon, noble metal thin films formed on surfaces of catalyst membranes by plating or sputtering methods, and the like have been usually used (e.g., Patent Literature 1).

However, although noble metals such as platinum exhibit high catalytic activities (an oxygen reduction activity and a hydrogen oxidation activity) and activity stability, they are very expensive and resources of them are limited. Therefore, the electrode catalysts are one of the factors regarding the high costs of various electrochemical devices. In particular, fuel cells use a number of MEAs in a stacked state in order to achieve predetermined outputs. Therefore, the amount of used electrode catalysts per fuel cell is large, thus preventing the widespread use of fuel cells.

Various measures have been taken in the past to solve the above-described problems. Specifically, a carbon catalyst obtained by depositing a macrocyclic compound on a surface of a carbon support and carbonizing the deposited macrocyclic compound (Patent Literature 2 to 4), a carbon catalyst obtained by carbonizing a mixture of a macrocyclic compound and an organic material including no carbon particles (Patent Literature 5 to 9), and a carbon catalyst obtained by carbonizing an organic material including no macrocyclic compounds (Patent Literature 10 and 11), and so on were reported in the past. All of these methods propose alternative catalysts using a smaller amount of or no noble metal. That is, they are electrode catalysts composed of a material(s) cheaper than the platinum catalyst, which is a typical noble metal catalyst, or carbon with platinum supported thereon.

### Citation List

### Patent Literature

Patent Literature 1: Japanese Unexamined Patent Application Publication No. H10-189002
Patent Literature 2: Japanese Patent No. 4461427
Patent Literature 3: Japanese Unexamined Patent Application Publication No. 2006-314871
Patent Literature 4: International Patent Publication No. WO2009/124905
Patent Literature 5: Japanese Patent No. 4452887
Patent Literature 6: Japanese Unexamined Patent Application Publication No. 2010-275115
Patent Literature 7: Japanese Unexamined Patent Application Publication No. 2010-275116
Patent Literature 8: Japanese Unexamined Patent Application Publication No. 2011-6282
Patent Literature 9: Japanese Unexamined Patent Application Publication No. 2011-6283
Patent Literature 10: Japanese Unexamined Patent Application Publication No. 2011-6280
Patent Literature 11: Japanese Unexamined Patent Application Publication No. 2011-6293

### Summary of Invention

### Technical Problem

However, although the carbon catalyst has an advantage that it can provide a catalyst cheaper than the noble metal catalyst, there are the following problems. In the proposed carbon catalyst (Patent Literature 2 to 4), for example, when conductive carbon particles having a low bulk density such as Ketjen black and acetylene black are used as a raw material, the bulk density of the obtained carbon catalyst is low. As a result, the obtained carbon catalyst cannot be easily handled as a catalyst powder when catalyst ink is manufactured, and the dispersing property deteriorates. Therefore, there is a problem that the manufacture of catalyst ink requires a longer time and the density of the catalyst layer manufactured by using the carbon catalyst is low. Further, there is another problem that the power generation ability per volume of the fuel cell is also low. Meanwhile, the carbon catalyst that is manufactured by carbonizing an organic polymer material instead of using conductive carbon particles having a low bulk density as a raw material (Patent Literature 5 to 11) also has a similar problem. Specifically, particles obtained immediately after the carbonization are large lumps and their particle diameters are not uniform. Therefore, these particles cannot be easily handled as a catalyst powder and the specific surface, which has a large influence on the catalysis, decreases. Therefore, a pulverizing process is carried out. However, when the specific surface is increased by performing the pulverizing process, the primary particle diameter becomes very small, thus causing a problem that the particles become an inconvenient carbon catalyst powder having a poor dispersing property and a low bulk density.

The present invention has been made in view of the above-described background and an object thereof is to provide a cell catalyst composition and its manufacturing method, and an electrode material and a fuel cell capable of solving problems including a low bulk density of a carbon catalyst, which becomes problematic when the carbon catalyst is used as a substitute for a noble metal catalyst, poor production efficiency, which arises in a catalyst ink manufacturing process due to the low bulk density, and poor power generation efficiency per unit volume, which arises when a fuel cell is manufactured.

### Solution to Problem

After the inventors conducted a diligent study, they found that the problems specified in the present application can be solved and completed the following present invention.
[1] A cell catalyst composition including a carbon catalyst granule and a binder resin, in which
   at least a part of the binder resin includes a resin (B) including a hydrophilic functional group,
   the carbon catalyst granule is:
   (i) a carbon catalyst granule in which a plurality of carbon catalyst (A) particles are bound to each other by using at least the resin (B); or/and
   (ii) a carbon catalyst granule in which a plurality of carbon catalyst (A) particles form a sintered body and are thereby bound to each other,
   the carbon catalyst (A) includes a carbon element, a nitrogen element, and a base metal element as constituent elements,
   an average particle diameter of the carbon catalyst granule is 0.5 to 100 µm, and a sphericity of the carbon catalyst granule is equal to or greater than 0.5.
[2] The cell catalyst composition described in Item [1], in which a tap density of the carbon catalyst granule is 0.1 to 2.5 g/cm³.
[3] The cell catalyst composition described in Item [1] or [2], in which
   the carbon catalyst (A) is obtained by mixing and heat-treating one type or two or more types of a carbon material and one type or two or more types of compound (E),
   the carbon material is at least one material selected from a group consisting of carbon particles derived from an inorganic carbon material and an organic material that becomes carbon particles by a heat-treatment,
   the compound (E) is a compound including a nitrogen element and/or a base metal element,
   the type of at least one of the carbon material and the compound (E) is chosen so that the at least one of the carbon material and the compound (E) serves as a supply source for the nitrogen element of the carbon catalyst (A), and
   the type of the compound (E) is chosen so that the compound (E) serves as a supply source for the base metal element of the carbon catalyst (A).
[4] The cell catalyst composition described in Item [3], in which the compound (E) is a complex or a salt including a base metal element.
[5] The cell catalyst composition described in Item [3], in which the compound (E) is at least one compound selected from a phthalocyanine-based compound, a naphthalocyanine-based compound, a porphyrin-based compound, and a tetra-azaannulene-based compound.
[6] The cell catalyst composition described in Item [3], in which the compound (E) is a phthalocyanine-based compound.
[7] The cell catalyst composition described in any one of Items [1] to [6], in which a BET specific surface of the carbon catalyst granule obtained in the Item (ii) is 20 to 2,000 m²/g.
[8] The cell catalyst composition described in any one of Items [1] to [7], in which the hydrophilic functional group of the resin (B) is at least one functional group selected from a group consisting of a sulfonic acid group, a carboxylic acid group, a phosphoric acid group, and a hydroxyl group.
[9] The cell catalyst composition described in any one of Items [1] to [8], in which the resin (B) is a resin having proton conductivity.
[10] The cell catalyst composition described in any one of Items [1] to [9], further including a hydrophilic oxide particle (C).
[11] The cell catalyst composition described in Item [10], in which the hydrophilic oxide particle (C) is an oxide including at least one element selected from a group consisting of Al, Si, Ti, Sb, Zr and Sn.
[12] The cell catalyst composition described in any one of Items [1] to [11], used for catalyst ink.
[13] The cell catalyst composition described in Item [12], further including a disperser.
[14] An electrode material including a cell catalyst composition described in any one of Items [1] to [11].
[15] A fuel cell including a solid polymer electrolyte, and a pair of electrode units that hold the solid polymer electrolyte therebetween, in which
   a cell catalyst composition described in any one of Items [1] to [11] is disposed as an electrode catalyst in a place where the cell catalyst composition is in contact with the polymer electrolyte membrane of at least one of the pair of electrode units.
[16] A manufacturing method of a cell catalyst composition including a carbon catalyst granule and a binder resin, in which
   at least a part of the binder resin includes a resin (B) including a hydrophilic functional group,
   the carbon catalyst granule is formed by either one of:
   (I) a granulating method in which: a carbon catalyst (A) is obtained by mixing a carbon material with a compound (E) and then heat-treating the mixture; and the obtained carbon catalyst (A) is wet-mixed with at least the resin (B) and then the mixture is sprayed and dried; and
   (II) a method in which a carbon material is wet-mixed with a compound (E) and then sprayed and dried for granulation, and the granulated particles are heat-treated to obtain the carbon catalyst (A),
   the carbon catalyst (A) includes a carbon element, a nitrogen element, and a base metal element as constituent elements,
   the carbon material is at least one material selected from a group consisting of carbon particles derived from an inorganic carbon material and an organic material that becomes carbon particles by a heat-treatment,
   the compound (E) is a compound including one type or two or more types of a nitrogen element and/or a base metal element,
   the type of at least one of the carbon material and the compound (E) is chosen so that the at least one of the carbon material and the compound (E) serves as a supply source for the nitrogen element of the carbon catalyst (A), and
   the type of the compound (E) is chosen so that the compound (E) serves as a supply source for the base metal element of the carbon catalyst (A).
[17] The manufacturing method of a cell catalyst composition described in Item [16], in which the resin (B) is a resin having proton conductivity.
[18] The manufacturing method of a cell catalyst composition described in Item [16] or [17], in which the compound (E) is a complex or a salt including a base metal element.
[19] The manufacturing method of a cell catalyst composition described in any one of Items [16] to [18], in which the granulation process by the wet-mixing and the spraying and drying is performed under presence of a disperser.

### Advantageous Effects of Invention

The present invention achieves an excellent advantageous effect that a cell catalyst composition and its manufacturing method, and catalyst ink using the cell catalyst composition, an electrode material and a fuel cell capable of solving problems including a low bulk density of a carbon catalyst, which arises when a carbon catalyst is used as a substitute for a noble metal catalyst, poor production efficiency, which arises in a catalyst ink manufacturing process due to the low bulk density, and poor power generation efficiency per unit volume, which arises when a fuel cell is manufactured, can be provided.

### Brief Description of Drawings

Fig. 1 shows a configuration of a fuel cell in which a carbon catalyst according to the present invention is applied to an electrode catalyst;
Fig. 2A is an SEM observation image (10,000 magnifications) of a carbon catalyst granule according to Example 2-3;
Fig. 2B is an SEM observation image (500 magnifications) of carbon catalyst granules according to Example 2-3;
Fig. 3A is an SEM observation image (10,000 magnifications) of a carbon catalyst granule according to Example 2-18;
Fig. 3B is an SEM observation image (500 magnifications) of carbon catalyst granules according to Example 2-18;

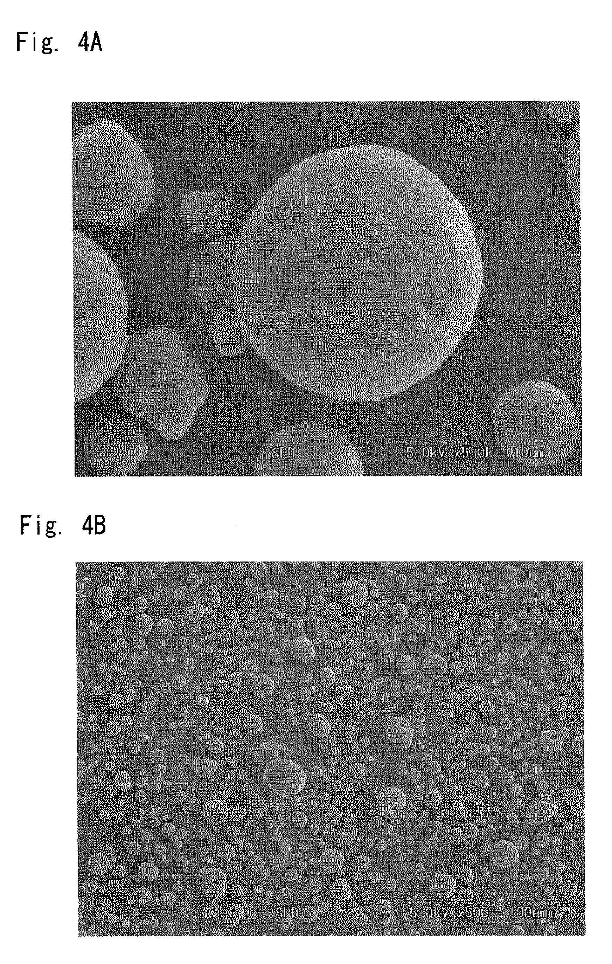

Fig. 4A is an SEM observation image (5,000 magnifications) of a carbon catalyst granule according to Example 1-101;
Fig. 4B is an SEM observation image (500 magnifications) of carbon catalyst granules according to Example 1-101; and
Fig. 5 is a graph showing voltage variation curves over time of carbon catalyst granules 1-4 (Example) and carbon catalyst A1-4 (Comparative Example).

### Description of Embodiments

A cell catalyst composition according to the present invention includes carbon catalyst granules and a binder resin. At least a part of the binder resin includes a resin (B) including a hydrophilic functional group. The carbon catalyst granule according to the present invention includes at least one of the following carbon catalyst granule:
(i) a carbon catalyst granule in which carbon catalyst (A) particles are bound to each other by using at least the resin (B) (hereinafter referred to as "first carbon catalyst granule"); and
(ii) a carbon catalyst granule in which carbon catalyst (A) particles form a sintered body and are thereby bound to each other (hereinafter referred to as "second carbon catalyst granule").

Note that the carbon catalyst (A) includes a carbon element, a nitrogen element, and a base metal element as constituent elements. The carbon catalyst (A) may include an element(s) other than the aforementioned elements, such as boron, within a range in which it does not deviate from the gist of the present invention. The average particle diameter of the carbon catalyst granules is no less than 0.5 µm and no greater than 100 µm. The sphericity of the shape of the carbon catalyst granule is preferably equal to or greater than 0.5, though it is not limited to this value range.

A cell catalyst composition according to the present invention can be manufactured by various manufacturing methods. That is, the manufacturing method is not limited to any particular manufacturing method. An example of a preferred manufacturing method includes either one of the following methods:
(I) a granulating method in which: a carbon catalyst (A) is obtained by mixing a carbon material with a compound (E) and then heat-treating the mixture; and the obtained carbon catalyst (A) is wet-mixed with at least the resin (B) and then the mixture is sprayed and dried; and
(II) a method in which a carbon material is wet-mixed with a compound (E) and then sprayed and dried for granulation, and the granulated particles are heat-treated to obtain the carbon catalyst (A).

The above-described carbon material is at least one material selected from a group consisting of carbon particles derived from an inorganic carbon material and an organic material that becomes carbon particles by a heat-treatment. That is, one type or two or more types of carbon particles derived from an inorganic carbon material may be used as the carbon material. Alternatively, one type or two or more types of an organic material that becomes carbon particles by a heat-treatment may be used. Further, the above-described carbon particles derived from an inorganic carbon material and the organic material may be mixed and then the mixture may be used. Further, the compound (E) is a compound including one type or two or more types of a nitrogen element(s) and/or one type or two or more types of a base metal element(s). The type of at least one of the carbon material and compound (E) is chosen so that the at least one of the carbon material and the compound (E) serves as a supply source for the nitrogen element of the carbon catalyst (A), and the type of the compound (E) is chosen so that the compound (E) serves as a supply source for the base metal element of the carbon catalyst (A). A carbon catalyst granule according to the present invention is explained hereinafter in detail.

### [First carbon catalyst granule]

As described above, the first carbon catalyst granule according to the present invention is a carbon catalyst granule in which a plurality of carbon catalyst (A) particles are bound to each other by using at least the resin (B). As described above, the average particle diameter of the first carbon catalyst granules is in a range of 0.5 to 100 µm, preferably 1 to 50 µm, and more preferably 5 to 25 µm. When the average particle diameter is less than 0.5 µm, the bulk density, i.e., the tap density decreases and the specific surface increases. Therefore, the property of dispersing into the solvent tends to deteriorate. As a result, it is difficult to obtain a uniform catalyst layer and the density of the catalyst layer could decrease. On the other hand, when the average particle diameter is greater than 100 µm, the flexibility of the thickness of the catalyst layer decreases. Consequently, the obtained carbon catalyst granules cannot be easily handled when a fuel cell is designed. Note that the average particle diameter of the first carbon catalyst granules according to the present invention is a value measured by a particle size distribution meter (Mastersizer 2000 manufactured by Malvern Instruments). The measurement was carried out in accordance with a powder method. A refractive index of a material was entered; a sample was placed inside a measurement cell; and a value was measured (i.e., read) when the signal level indicated an optimal value. Further, an obtained d-50 value was used as an average particle diameter.

The shape of the first carbon catalyst granule is not limited to any particular shape, provided that the granule has such a shape that it can be easily handled to achieve the object of the present invention. Further, the first carbon catalyst granules may partially include those having a plate-like shape or those having a distorted shape with a significantly concaved surface. In view of the easy handling, the property of dispersing into the solvent, and the efficiency of packing into a fuel cell, their sphericity is preferably equal to or greater than 0.5. The carbon catalyst granules do not necessarily all have to have the same shape. That is, the carbon catalyst granules may be a mixture including particles having a plurality of different shapes. Examples of preferred shapes include a spherical shape and an ellipse shape. Alternatively, the carbon catalyst granules may have fine projections and depressions on their surfaces. The sphericity is preferably equal to or greater than 0.7, and more preferably equal to or greater than 0.9. Note that the sphericity in the present application means a value that is obtained by observing the shapes of particles by a scanning electron microscope for an actual area of 1 cm², measuring the minor axes and the major axes of 100 arbitrarily selected particles that are located on the forefront surface observable from that area and whose particle shapes can be confirmed, and calculating the average value of the ratios (minor axes)/(major axes) of the 100 selected particles. The shape of the first carbon catalyst granule can be adjusted as desired by changing the types of raw materials and/or the conditions (the concentration of a paste, the viscosity, the type of a solvent, a drying temperature, and so on) in the later-described process for spraying and drying a paste of mixed raw materials and thereby granulating the paste.

The first carbon catalyst granule preferably has a high tap density. Specifically, the tap density is preferably 0.1 to 2.5 g/cm³, more preferably 0.2 to 2.0 g/cm³, and particularly preferably 0.2 to 0.6 g/cm³. When the tap density is less than 0.1 g/cm³, the carbon catalyst granules become very bulky. Consequently, the carbon catalyst granules cannot be easily handed when catalyst ink is manufactured, and the obtained catalyst layer has a significantly low density. As a result, the carbon catalyst granules could have a little practical use. On the other hand, when the tap density is greater than 2.5 g/cm³, the obtained material tends to have a smaller number of pores on its surface and have a smaller specific surface, though the packing rate of the carbon catalyst per volume in the catalyst layer increases. As a result, the reaction area with oxygen, which is a gas component to be reacted with, becomes greatly smaller. This smaller reaction area could lead to a decrease in the power generation efficiency when a fuel cell is manufactured.

<Carbon catalyst (A)> The carbon catalyst (A) is not limited to any particular carbon catalyst, provided that the carbon catalyst includes a carbon element, a nitrogen element, and a base metal element as constituent elements. That is, publicly-known conventional carbon catalysts can be used. In general, examples of the active site of a carbon catalyst include a base metal element included in a base metal-N4 structure (structure in which four nitrogen elements are two-dimensionally arranged around a base metal element) on the surface of a carbon particle and a carbon element near a nitrogen element introduced into an edge of the surface of a carbon particle. Therefore, it is important that the carbon catalyst (A) includes a nitrogen element and a base metal element constituting the above-described active site in order to make the carbon catalyst (A) have an oxygen reduction activity. Further, the BET specific surface of the carbon catalyst (A) is preferably 20 to 2,000 m²/g, more preferably 100 to 1,000 m²/g, and particularly preferably 60 to 600 m²/g.

When the BET specific surface is less than 20 m²/g, the reaction area with oxygen, which is a gas component to be reacted with, becomes greatly smaller. This smaller reaction area could lead to a decrease in the power generation efficiency when a fuel cell is manufactured. On the other hand, when the BET specific surface is greater than 2,000 m²/g, catalyst ink having excellent dispersion stability cannot be easily manufactured unless a large amount of a binder component having proton conductivity is used. Therefore, the amount of the carbon catalyst in the catalyst layer decreases. As a result, the power generation efficiency per cell mass could decrease.

<Method of manufacturing carbon catalyst (A)> The method of manufacturing the carbon catalyst (A) is not limited to any particular manufacturing method. That is, publicly-known conventional methods including a method for depositing a macrocyclic compound on the surface of a carbon support and carbonizing the deposited macrocyclic compound, a method for carbonizing a mixture of a macrocyclic compound and an organic material, a method for carbonizing an organic material including no macrocyclic compound, and a method for using carbon particles derived from an inorganic carbon material can be used. Examples of preferred manufacturing methods include a granulating method in which: a carbon catalyst (A) is obtained by mixing a carbon material with a compound (E) and then heat-treating the mixture; and the obtained carbon catalyst (A) is wet-mixed with at least the resin (B) and then the mixture is sprayed and dried. Examples also include a method including a process for washing the carbon catalyst obtained by the above-described heat treatment by using an acid and drying the washed carbon catalyst. Further, examples also include a method including a process for heat-treating the carbon catalyst obtained by the above-described acid washing. In the following explanations, carbon particles derived from an inorganic carbon material are referred to as "carbon particles (D1)" and carbon particles obtained by heat-treating an organic material are referred to as "carbon particles (D2)".

<Carbon particle (D1)> The carbon particles (D1) are not limited to any particular carbon particles, provided that they are inorganic carbon particles derived from an inorganic material. Examples of the carbon particles (D1) include carbon black such as furnace black; acetylene black, Ketjen black, and medium thermal carbon black, activated carbon, graphite, carbon nano-tubes, carbon nano-fibers, carbon nano-horns, graphene, graphene nano-platelets, nano-porous carbon, and carbon fibers. The various physical properties such as a particle diameter, a shape, a BET specific surface, a pore volume, a pore diameter, a bulk density, a DBP oil absorption amount, surface acidity/basicity, a surface hydrophilic level, and conductivity, and the cost of carbon particles differ from one another according to the type and the manufacturer thereof. Therefore, an optimal material can be chosen according to the use and the required properties. One type or two or more types of carbon particles (D1) may be used.

Examples of commercially available carbon particles include: Ketjen black manufactured by Akzo such as Ketjen black EC-300J and EC-600JD;
furnace black manufactured by Tokai Carbon Co., Ltd. such as Toka black #4300, #4400, #4500 and #5500;
furnace black manufactured by Degussa such as Printex L;
furnace black manufactured by Columbian such as Raven 7000, 5750, 5250, 5000 ULTRA III, 5000 ULTRA, Conductex SC ULTRA, 975 ULTRA, PUER BLACK 100, 115 and 205;
furnace black manufactured by Mitsubishi Chemical Corporation such as #2350, #2400B, #2600B, #30050B, #3030B, #3230B, #3350B, #3400B and #5400B;
furnace black manufactured by Cabot such as MONARCH 1400, 1300, 900, Vulcan XC-72R and Black Pearls 2000;
furnace black manufactured by TIMCAL Ltd. such as Ensaco 250G, Ensaco 260G, Ensaco 350G, and Super P-Li;
acetylene black manufactured by Denki Kagaku Kogyo Kabushiki Kaisha such as Denka black, Denka black HS-100 and FX-35;
carbon nano-tubes manufactured by Showa Denko K.K. such as VGCF, VGCF-H, VGCF-X;
carbon nano-tubes manufactured by Mejiro Nano Carbon;
graphene nano-platelets manufactured by XGSciences such as xGnP-C-750, xGnP-M-5;
nano-porous carbon manufactured by Easy-N; and
carbon fibers manufactured by Gunei Chemical Industry Co., Ltd. such as Kynol carbon fibers and Kynol activated carbon fibers. However, the carbon particles are not limited to these examples.

<Carbon particles (D2)> The organic material that becomes the carbon particles (D2) is not limited to any particular material, provided that they become carbon particles after the heat treatment. In some cases, the use of an organic material that includes a hetero element in advance is preferred in order to make the carbon particles include the hetero element, which serves as an active site, after the heat treatment. Specific examples of the organic material include phenol-based resins, polyimide-based resins, polyamide-based resins, polyamide-imide-based resins, polyacrylonitrile-based resins, polyaniline-based resins, phenol-formaldehyde resin-based resins, polyimidazole-based resins, polypyrrole-based resins, polybenzimidazole-based resins, melamine-based resins, pitch, brown coal, polycarbodiimide, biomass, proteins, humic acid, and their derivatives.

<Compound (E)> As described above, the compound (E) may be any compound including one type or two or more types of a nitrogen element(s) and/or one type or two or more types of a base metal element(s). That is, there is no particular restriction except that it must not deviate from the gist of the present invention. Examples of the compound (E) include organic compounds such as pigments and polymers, and inorganic compounds such as metals, metal oxides and metal salts. Only one type of a compound (E) may be used. Alternatively, two or more types of compounds (E) may be used together. The base metal element is preferably a metal element other than the noble metal elements (ruthenium, rhodium, palladium, silver, osmium, iridium, platinum and gold) among the transition metal elements. The base metal element preferably include at least one type of element selected from cobalt, iron, nickel, manganese, copper, titanium, vanadium, chromium, zinc, tin, aluminum, zirconium, niobium, tantalum and magnesium. In order to efficiently introduce a nitrogen element and a base metal element into the carbon catalyst, the compound (E) is preferably an aromatic compound including nitrogen capable of including a base metal element in its molecule. Specific examples include phthalocyanine-based compounds, naphthalocyanine-based compounds, porphyrin-based compounds, and tetra-azaannulene-based compounds. The aforementioned aromatic compound may be one into which an electron sucking functional group and/or an electron supplying functional group are/is introduced. The phthalocyanine-based compounds are particularly preferred as raw materials because phthalocyanine-based compounds including various base metal elements are commercially available and their costs are low. Specific examples include cobalt phthalocyanine-based compounds, nickel phthalocyanine-based compounds, and iron phthalocyanine compounds. By using these raw materials, it is possible to provide an inexpensive carbon catalyst having a high oxygen reduction activity.

When the carbon material is mixed with the compound (E), they need to be mixed so that the raw materials are uniformly mixed and combined. Examples of the mixing method include dry-mixing and wet-mixing. As for the mixing apparatus, a dry-type mixing apparatus or a wet-type mixing apparatus can be used.

Examples of the dry-type mixing apparatus include a roll mill such as a two-roll mill and a three-roll mill, a high-speed stirrer such as a Henschel mixer and a super mixer, a fluid energy pulverizer such as a micronizer and a jet mill, an attritor, particle combining apparatuses "Nanocure", "Nobilta" and "Mechanofusion" manufactured by Hosokawa Micron Ltd., powder surface reforming apparatuses "hybridization system", "Mechanomicros" and "Miraro" manufactured by Nara Machinery Co., Ltd.

When a dry-type mixing apparatus is used, a powder raw material may be directly added in the powder state to the other power raw material that serves as a matrix. However, in order to manufacture a more uniform mixture, it is preferable to use a method in which a raw material is dissolved or dispersed in a small amount of a solvent in advance and then the composition is added to the other power raw material that serves as a matrix while dissolving aggregation particles of the matrix power raw material. Further, in some cases, heating is preferably performed in order to improve the process efficiency.

Among the possible compounds (E), there are materials that are in a solid state at a room temperature but have a melting point, a softening point, or a glass transition temperature lower than 100°C. When such materials are used, there are cases where they can be mixed more uniformly when they are melted and mixed in a heated state than when they are mixed at a room temperature. Examples of the wet-type mixing apparatus include those mentioned in the later-described <Process 1-1>.

In the cases where the carbon material is wet-mixed with the compound (E) and each raw material cannot be uniformly dissolved, a commercially available disperser may be added, dispersed, and mixed in addition to the other materials in order to improve the wettability and the dispersing of each raw material into the solvent. As for the disperser, aqueous dispersers and solvent-based dispersers can be used. Specific examples of the dispersers include the below-mentioned dispersers. There is no particular restriction on commercially available aqueous dispersers. Examples of the commercially available aqueous dispersers include those mentioned in the later-described <Resin (B) including hydrophilic functional group>. Further, examples includes disperses manufactured by Nittetsu Mining Co., Ltd. such as an iron phthalocyanine derivative (ammonium sulfonate).

There is no particular restriction on commercially available solvent-based dispersers. Examples of the commercially available solvent-based dispersers include the below-mentioned dispersers.

Examples of disperses manufactured by BYK K.K. include Anti-Terra-U, U100, 203, 204, 205, Disperbyk-101, 102, 103, 106, 107, 10 8, 109, 110, 111, 112, 116, 130, 140, 142, 161, 162, 163, 164, 166, 167, 168, 170, 171, 174, 180, 182, 183, 184, 185, 2000, 2001, 2050, 2070, 2096,2150, BYK-P104, P104S, P105, 9076, 9077 and 220S.

Examples of disperses manufactured by The Lubrizol Company include SOLSPERSE 3000, 5000, 9000, 13240, 13650, 13940, 17000, 18000, 19000, 21000, 22000, 24000SC, 24000GR, 26000, 28000, 31845, 32000, 32500, 32600, 33500, 34750, 35100, 35200, 36600, 37500,38500 and 53095.

Examples of disperses manufactured by EFKA include EFKA1500,1501, 1502, 1503, 4008,4009,4010,4015,4020,4046,4047,4050,4055,4060,4080,4300,4330,4400,4401, 4402, 4403, 4406, 4510, 4520, 4530, 4570, 4800, 5010, 5044, 5054, 5055, 5063, 5064, 5065, 5066, 5070, 5071, 5207 and 5244.

Examples of disperses manufactured by Ajinomoto Fine-Techno Co., Inc. include

Ajisper PB711, PB821, PB822, PN411 and PA111.

Examples of disperses manufactured by Kawaken Fine Chemicals Co., Ltd. include Hinoact 1000, 1300M, 1500, 1700, T-6000, 8000, 8000E and 9100.

Examples of disperses manufactured by BASF Japan Ltd. include Luvicap.

As for the case of the wet-mixing, it involves a process for drying the mixture produced by using the wet-type mixture apparatus. In this case, a shelf dryer, a rotary dryer, an air-current dryer, a spray dryer, a stirring dryer, a freeze dryer, or the like can be appropriately used as the dryer apparatus.

In the manufacture of the carbon catalyst (A), the carbon catalyst (A) having an excellent catalytic activity can be obtained by selecting a mixing apparatus, a dispersing apparatus, and if necessary, a drying apparatus most suitable for the carbon material and the compound (E).

In the method for heat-treating the mixture of the carbon material and the compound (E), the heating temperature, though depending on the carbon material and the compound (E), which are the raw materials, is preferably 500 to 1,100°C, and more preferably 700 to 1,000°C. When the heating temperature is lower than 500°C, the compound (E) including the nitrogen element and/or the base metal element cannot be easily melted and thermally decomposed. Therefore, the catalyst activity could become lower. On the other hand, when the heating temperature is higher than 1,000°C, the thermal decomposition and the sublimation of the compound (E) become intense. As a result, the base metal-N4 structure and the nitrogen element on the edge, which are the active sites on the surface of the carbon particles (D1) or/and the carbon particles (D2), are less likely to remain. Therefore, the catalyst activity could become lower.

As for the atmosphere in the heat treatment, an atmosphere of an inert gas such as nitrogen and argon, or a reducing gas atmosphere in which hydrogen is mixed into an inert gas is preferred. This is because it is necessary to carbonize the compound (E) as much as possible by incomplete combustion and thereby to leave the nitrogen element, the base metal element, and the like on the surfaces of the carbon particles. Further, the heat treatment can be performed under an ammonia gas atmosphere including a large amount of a nitrogen element in order to prevent the decrease of the nitrogen element in the carbon catalyst during the heat treatment.

Further, the heat treatment does not necessarily have to be performed at a fixed temperature in a single process. For example, when two or more compounds (E) having different decomposition temperatures are mixed, the heat treatment can be divided into several stages with different heating temperatures in accordance with the decomposition temperature of each component. In this efficient way, more active sites could be left in some cases.

Examples of the method of manufacturing the carbon catalyst (A) also include a method including a process for washing the carbon catalyst obtained by the above-described heat treatment by using an acid and drying the washed carbon catalyst. The acid used in this process is not limited to any particular acids, provided that they can elute the base metal component that does not act as an active site and exists on the surface of the carbon catalyst obtained by the above-described heat treatment. Preferred acids include a concentrated hydrochloric acid and a dilute sulfuric acid that have a low reactivity with the carbon catalyst and a strong dissolving power for the base metal component. As a specific washing method, an acid and the carbon catalyst are added in a glass vessel and the contents are stirred for several hours while dispersing them. Then, the glass vessel is left at a standstill and the supernatant liquid is removed. Then, the above-described method is repeated until the color of the supernatant liquid disappears. Finally, the acid is removed by filtration and water-washing, and the remained substance is dried. The carbon catalyst including a carbon element near a nitrogen element on the edge as a catalyst active site is preferred because the base metal component that does not act as the active site on the surface is removed by the acid washing and the catalyst activity is thereby improved.

Examples of the method of manufacturing the carbon catalyst (A) also include a method including a process for heat-treating the carbon catalyst obtained by the above-described acid washing again. The conditions of this heat treatment are not significantly different from those of the previous heat treatment. The heating temperature is preferably 500 to 1,100°C, and more preferably 700 to 1,000°C. Further, in view of the fact that the nitrogen element on the surface is less likely to be decomposed and decreased, the atmosphere is preferably an atmosphere of an inert gas such as nitrogen and argon, a reducing gas atmosphere in which hydrogen is mixed into an inert gas, or an ammonia gas atmosphere including a large amount of a nitrogen element.

<Resin (B) including hydrophilic functional group> As described above, the resin (B) serves for binding the carbon catalyst (A) particles to each other in the first carbon catalyst granule. It is necessary to infiltrate water molecules, which carry protons, into the granule in order to carry protons necessary for the oxygen reduction reaction to the active sites of the carbon catalyst (A). By using the resin (B) including a hydrophilic functional group as a binding material, the interior of the granule becomes a hydrophilic surface and hence water molecules can easily infiltrate thereto. As a result, protons can be efficiently carried to or near the active sites. The resin (B) that functions as the binding material is preferably a proton-conductive resin that exhibits a proton conductivity of 10⁻³ Scm⁻¹ or higher at 100 %RH and 25°C in order to efficiently carry protons to or near the active sites. Further, there is no restriction on the molecular weight of the resin (B), provided that the resin (B) can act as described above.

For the mixed state of the carbon catalyst (A) and the resin (B) in the first carbon catalyst granule, it is preferable that they be uniformly distributed without being condensed with each other so that the oxygen reduction reaction of the carbon catalyst (A) can be efficiently carried out. Further, since the resin (B) serves for carrying protons necessary for the oxygen reduction reaction to or near the active sites, it is preferable that the resin (B) be adhered on the surface of the primary particles of the carbon catalyst (A).

The hydrophilic functional group of the resin (B) is preferably an acidity functional group such as a sulfonic acid group, a carboxylic acid group and a phosphoric acid group, or basic functional group such as a hydroxyl group and an amino group. In view of the proton dissociation property, the acidity functional group such as a sulfonic acid group, a carboxylic acid group, and a phosphoric acid group is more preferred.

Examples of the resin (B) include: resins with a sulfonic acid group introduced therein such as olefin-based resins, polyimide-based resins, phenolic resins, polyether ketone-based resins, polybenzimidazole-based resins, and polystyrene-based resins, sulfonic acid-doped styrene-ethylene-butylene-styrene copolymers, and resins including a sulfonic acid such as perfluoro sulfonic acid-based resins;
resins including a carboxylic acid such as a polyacrylic acid and carboxymethyl cellulose;
resins including a hydroxyl group such as polyvinyl alcohol;
resins including an amino group such as polyallylamine, polydiallylamine, polydiallyldimethyl ammonium salt, polybenzimidazole-based resins that form a salt with an acid at the imidazole moiety; and
resins including other hydrophilic functional groups such as polyacrylamide, polyvinyl pyrrolidone, and polyvinyl imidazole.

Examples of resins having proton conductivity include resins with a sulfonic acid group introduced therein such as olefin-based resins (such as polystyrene sulfonate and polyvinyl sulfonate), polyimide-based resins, phenolic resins, polyether ketone-based resins, polybenzimidazole-based resins, and polystyrene-based resins, sulfonic acid-doped styrene-ethylene-butylene-styrene copolymers, perfluoro sulfonic acid-based resins, and polybenzimidazole-based resins that form a salt with an acid at the imidazole moiety. In particular, the perfluoro sulfonic acid-based resins have high chemical stability since they include fluorine atoms having a high electronegativity. Further, since the dissociation property of their sulfonic acid group is high, the perfluoro sulfonic acid-based resins have high proton conductivity. Therefore, the perfluoro sulfonic acid-based resins are also useful as a solid polymer electrolyte for a fuel cell, and are preferred. Specific examples of the perfluoro sulfonic acid-based resins include "Nafion" manufactured by Du Pont, "Flemion" manufactured by Asahi Glass Co., Ltd., "Aciplex" manufactured by Asahi Kasei Corporation, and "Gore Select" manufactured by Gore. Only one type of a resin (B) including a hydrophilic functional group may be used, or two or more types of resins (B) may be used together.

A commercially available disperser that can improve the dispersing property of the carbon catalyst (A) can be used as the resin (B). There is no particular restriction on commercially available disperses.

Examples of the commercially available disperses include the below-mentioned disperses.

Examples of disperses manufactured by BYK K.K. include Disperbyk, Disperbyk-180, 183, 184, 185, 187, 190, 191, 192, 193, 198, 2090, 2091, 2095, 2096 and BYK-154.

Examples of disperses manufactured by The Lubrizol Company include SOLSPERSE 12000, 20000, 27000, 41000, 41090, 43000, 44000 and 45000.

Examples of disperses manufactured by EFKA include EFKA 1101, 1120, 1125, 1500, 1503, 4500, 4510, 4520, 4530, 4540, 4550, 4560, 4570, 4580 and 5071.

Examples of disperses manufactured by BASF Japan Ltd. include JONCRYL 67, 678, 586, 611, 680, 682, 683, 690, 52J, 57J, 60J, 61J, 62J, 63J, 70J, HPD-96J, 501J, 354J, 6610, PDX-6102B, 7100, 390, 711, 511, 7001, 741, 450, 840, 74J, HRC-1645J, 734, 852, 7600, 775, 537J, 1535, PDX-7630, 352J, 252D, 538J, 7640, 7641, 631, 790, 780, 7610, JDX-C3000, JDX-3020 and JDX-6500. Further, Examples manufactured by BASF Japan Ltd. also include Luvitec K17, K30, K60, K80, K85, K90, K115, VA64W, VA64, VPI55K72W and VPC55K65W.

Examples of disperses manufactured by Kawaken Fine Chemicals Co., Ltd. include Hinoact A-110, 300, 303 and 501.

Examples of disperses manufactured by Nittobo Medical Co., Ltd. include PAA series, PAS series, Amphoteric series PAS-410C, 410SA, 84, 2451 and 2351.

Examples of disperses manufactured by ISP Japan include polyvinyl pyrrolidone PVP K-15, K-30, K-60, K-90 and K-120.

Examples of disperses manufactured by Maruzen Petrochemical Co., Ltd. include Polyvinyl Imidazole PVI.

<Hydrophilic oxide particle (C)> The hydrophilic oxide particles (C) serve for assisting the proton conductivity necessary for the oxygen reduction reaction. Further, they also serve for retaining water necessary for the proton conductivity in or near the active sites of the carbon catalyst (A). Therefore, it is preferable that the hydrophilic oxide particles are uniformly distributed in the carbon catalyst granule without being condensed with each other. The average particle diameter of the hydrophilic oxide particles (C) is preferably equal to or smaller than 200 nm.

The hydrophilic oxide particles (C) are not limited to any particular oxide particles, provided that their surfaces are hydrophilic. However, a preferred oxide is an oxide including at least one element selected from a group consisting of Al, Si, Ti, Sb, Zr and Sn. Preferred hydrophilic oxide particles (C) are ones that are manufactured by using a metal alcoxide as a raw material by a sol-gel method in which particles are formed through hydrolysis and dehydration condensation polymerization. Further, it is preferable that the oxide including the above-listed elements forms a hydrate because the proton conductivity improves.

Specific examples of the hydrophilic oxide particles (C) including the aforementioned elements include Al₂O₃, Al₂O₃·nH₂O, SiO₂, SiO₂·H₂O, TiO₂, TiO₂·nH₂O, Sb₂O₅, Sb₂O₅·nH₂O, ZrO₂, ZrO₂·nH₂O, SnO₂ and SnO₂·nH₂O. Further, preferred hydrophilic oxide particles (C) are ones that exhibit a proton conductivity of 10⁻⁵ Scm⁻¹ or higher at 100 %RH and 25°C.

### <Manufacturing method of first carbon catalyst granule>

There is no particular restriction on the manufacturing method of the first carbon catalyst granule. However, as a preferred embodiment, there is a method including a process 1 for wet-mixing a carbon catalyst (A) with a resin (B) that functions as a binding material, and a process 2 for spraying and drying the wet-mixture obtained in the process 1 and thereby granulating the mixture. At least the resin (B) needs to be included as the binding material. Further a resin having no hydrophilic functional group may be included.

<Process 1-1> There is no particular restriction on the ratio of the carbon catalyst (A) and the resin (B), which constitute the carbon catalyst granule. For example, the amount of the resin (B) with respect to the 100 pts.mass of the carbon catalyst (A) is 1 to 100 pts.mass and preferably 5 to 50 pts.mass. When the amount of the resin (B) is larger than 100 pts.mass, the amount of the carbon catalyst contained in the catalyst layer become a half of the catalyst layer or smaller. Therefore, the power generation efficiency could deteriorate, thus lowering the practicality. On the other hand, when the amount of the resin (B) is smaller than 1 pts.mass, there is a possibility that the amount of the resin for binding the carbon catalysts (A) to each other is insufficient and uniform granules are less likely to be obtained.

Further, in the case where the hydrophilic oxide particles (C) are added, it is preferable that the total mass of the resin (B) and the hydrophilic oxide particles (C) is in the same range as the above-described preferred range for the resin (B) with respect to the carbon catalyst (A). Further, the amount of the hydrophilic oxide particles (C) with respect to the 100 pts.mass of the resin (B) is preferably 1 to 50 pts.mass. When the amount of the hydrophilic oxide particles (C) is larger than 50 pts.mass, the hydrophilic oxide particles (C) tend to condense with each other. Therefore, in some cases, the hydrophilic oxide particles (C) are less likely to be unformed distributed in the carbon catalyst granule.

Examples of the wet-type mixing apparatus used in the process 1-1 include: mixers such as dispers, homo-mixers, and planetary mixers;
homogenizers such as "Crearmix" manufactured by M Technique Co., Ltd. and "Filmix" manufactured by PRIMIX Corporation;
medium-type dispersers such as Paint Conditioner (manufactured by Red Devil Company), ball mills, sand mills (such as "Dyno-Mill" manufactured by Shinmaru Enterprises Corporation), attritors, pearl mills (such as "DCP mill" manufactured by Nippon Eirich Co., Ltd.), and coball mills;
Medium-less dispersers such as wet-jet mils (such as "Genus PY" manufactured by Genus Co., Ltd., "Star Burst" manufactured by Sugino Machine Limited, and "Nanomizer" manufactured by Nanomizer Inc.), "Crear SS-5" manufactured by M Technique Co., Ltd., and "Micros" manufactured by Nara Machinery Co., Ltd.; and
other roll mills and kneaders. However, the wet-type mixing apparatus is not limited to the aforementioned apparatuses. Further, it is preferable to use a wet-type mixing apparatus which is treated (or modified) so as to prevent any metal from being mixed from the apparatus itself in advance.

For example, when a medium-type disperser is used, it is preferable to use a method in which a disperser whose agitator and vessel are made of ceramics or a resin, or use a disperser whose metallic agitator and vessel surface are treated by tungsten carbide thermal spraying, resin coating, or the like. As for the medium, glass beads, zirconia beads, or ceramic beads such as alumina beads are preferably used. Further, when a roll mill is used, a roll(s) made of ceramics is preferably used. Only one type of a dispersing apparatus may be used, or two or more types of dispersing apparatuses may be used in combination. Further, in order to improve the wettability and the dispersing property of the carbon catalyst (A) into the solvent, a disperser having a common hydrophilic functional group can be added, dispersed, and mixed in addition to the other substances.

<Process 1-2> In the process 1-2, a spraying and drying machine such as a spray dryer can be used. Specifically, the solvent may be volatilized and removed while spraying the above-described mixture paste in the form of mist. The spraying condition and the volatizing condition of the solvent can be chosen as desired.

### [Second carbon catalyst granule]

As described above, the second carbon catalyst granule according to the present invention is a carbon catalyst granule in which the carbon catalyst (A) particles form a sintered body and are thereby bound to each other. Further, the average particle diameter of one lump is 0.5 to 100 µm. The granule can be formed by a heat treatment. The carbon element of the carbon catalyst (A) of the second carbon catalyst granule is preferably derived from the carbon particles (D1) or/and the carbon particles (D2). That is, a plurality of carbon particles (D1) or/and carbon particles (D2) are preferably bound to each other by chemical bonding to form one carbide lump. Specifically, the second carbon catalyst granule is one that is formed by binding the carbon particles (D1) or/and the carbon particles (D2) by a carbide interposed therebetween. The carbide is generated by the thermal decomposition of an organic matter. Therefore, the second carbon catalyst granule is in a state completely different from that of other carbon materials such as carbon black in which fine primary particles are physically adhered to each other and thereby form an aggregated state.

The second carbon catalyst granule incudes a nitrogen element and a base metal element on the bound carbon particles (D1) or/and the carbon particles (D2). In general, examples of the active site of a carbon catalyst include a base metal element included in the base metal-N4 structure (structure in which four nitrogen elements are two-dimensionally arranged around a base metal element) on the surface of a carbon particle, and a carbon element near a nitrogen element introduced into the edge of the surface of a carbon particle. Therefore, it is important that the carbon catalyst (A) includes a nitrogen element and/or a base metal element constituting the above-described active site in order to make the carbon catalyst (A) have an oxygen reduction activity.

<Carbon particle (D1)> The carbon particles (D1) are not limited to any particular carbon particles, provided that they are inorganic carbon particles. Examples of the carbon particles (D1) include those mentioned above for the first carbon catalyst granule. Only one type of carbon particles (D1) may be used, or a plurality of types of carbon particles (D1) may be mixed. When a sintered body is formed from a plurality of types of carbon particles (D1), the design flexibility for physical properties such as the specific surface, the pore diameter, the tap density, and the conductivity of the sintered body increases. Therefore, the flexibility of the design and the properties of catalyst ink, a catalyst layer, and a fuel cell could also possibly increase.

<Carbon particle (D2)> The carbon particles (D2) are not limited to any particular carbon particles, provided that they are carbon particles derived from an organic carbon material. Examples of the carbon particles (D2) include those mentioned above for the first carbon catalyst granule. Only one type of carbon particles (D2) may be used, or a plurality of types of carbon particles (D2) may be mixed. Further, a mixture of carbon particles (D1) and carbon particles (D2) may be used.

<Compound (E)> The raw material(s) that is used when a nitrogen element and a base metal element are introduced into the second carbon catalyst granule is not limited to any particular materials, provided that it is a compound (E) including a nitrogen element and/or a base metal element. Preferred examples of the compound (E) include those mentioned above for the first carbon catalyst granule.

The average particle diameter of the second carbon catalyst granules is in a range of 0.5 to 100 µm, preferably 1 to 50 µm, and more preferably 5 to 25 µm. When the average particle diameter is less than 0.5 µm, the tap density decreases and the specific surface increases. Therefore, the property of dispersing into the solvent could tend to deteriorate. As a result, it is difficult to obtain a uniform catalyst layer and the density of the catalyst layer could decrease. On the other hand, when the average particle diameter is larger than 100 µm, the flexibility of the thickness of the catalyst layer decreases. Consequently, the obtained carbon catalyst may not be easily handled when a fuel cell is designed. Further, since the contact area with the binder having proton conductivity could be significantly decreased, the oxygen reduction activity could decreases in some cases. The method for measuring the average particle diameter of the carbon catalyst according to the present invention is the same as the previously-described measuring method.

The shape of the second carbon catalyst granule is not limited to any particular shapes, provided that the second carbon catalyst granule has such a shape that it can be easily handled to achieve the object of the present invention. Further, the second carbon catalyst granule may have a spherical shape or an ellipse shape. Alternatively, the second carbon catalyst granule may have fine projections and depressions on its surface. Further, all of the second carbon catalyst granules do not necessarily have to have the same shape. That is, the second carbon catalyst granules may be a mixture including particles having the aforementioned different shapes. For example, the second carbon catalyst granules may partially include those having a plate-like shape or those having a distorted shape with a significantly concaved surface. The sintered body preferably has a spherical shape or an ellipse shape. By doing so, they can be easily handled as a carbon catalyst powder and the property of dispersing into the solvent improves. In addition, when a catalyst layer or a fuel cell having a limited volume is desired to be filled with a carbon catalyst as much as possible, they can be efficiently filled with the carbon catalyst. The definition of the sphericity and its preferred range of the second carbon catalyst granule are similar to those explained above with the first carbon catalyst granule.

Further, in order to improve the catalyst efficiency, the BET specific surface of the second carbon catalyst granule according to the present invention is preferably 20 to 2,000 m²/g, more preferably 40 to 1,000 m²/g, and particularly preferably 60 to 600m²/g. When the BET specific surface is less than 20 m²/g, the reaction area with oxygen, which is a gas component to be reacted with, becomes greatly smaller. This smaller reaction area could lead to a decrease in the power generation efficiency when a fuel cell is manufactured. On the other hand, when the BET specific surface is larger than 2,000 m²/g, catalyst ink having excellent dispersion stability cannot be easily manufactured unless a large amount of a binder component having proton conductivity is used. Therefore, the amount of the carbon catalyst in the catalyst layer decreases. As a result, the power generation efficiency per cell mass could decrease.

The second carbon catalyst granule according to the present invention preferably has a high tap density. Specifically, the tap density is preferably 0.1 to 2.5 g/cm³, more preferably 0.1 to 2.0 g/cm³, more preferably 0.2 to 1.5 g/cm³, and particularly preferably 0.2 to 0.6 g/cm³. When the tap density is less than 0.1 g/cm³, the carbon catalyst granules become very bulky. Consequently, the carbon catalyst granules cannot be easily handed when catalyst ink is manufactured, and the obtained catalyst layer has a significantly low density. As a result, the carbon catalyst granules could have a little practical use. On the other hand, when the tap density is greater than 2.5 g/cm³, the obtained material tends to have a smaller number of pores on its surface and have a smaller specific surface, though the packing rate of the carbon catalyst per volume in the catalyst layer increases. As a result, the reaction area with oxygen, which is a gas component to be reacted with, becomes greatly smaller. This smaller reaction area could lead to a decrease in the power generation efficiency when a fuel cell is manufactured.

### <Manufacturing method of second carbon catalyst granule>

There is no particular restriction on the manufacturing method of the second carbon catalyst granule. However, as a preferred embodiment, there is an example method including a process 2-1 for wet-mixing a carbon material with a compound (E) including a nitrogen element and/or a base metal element, a process 2-2 for spraying and drying the wet-mixture (paste) obtained in the process 2-1 and thereby granulating the mixture (paste), and a process 2-3 for heat-treating the granules obtained in the process 2-2 and thereby obtaining a sintered body. Further, there is an example method including a process for washing the sintered body obtained in the process 2-3 by using an acid and drying the washed sintered body. Further, there is an example method including a process for heat-treating the sintered body, which has been washed by an acid and dried.

<Process 2-1> In the process 2-1, a paste of each of a carbon material and a compound (E) may be independently obtained by wet-mixing and then these pastes may be mixed with each other to obtain a mixed paste. Alternatively, a carbon material and a compound (E) may be wet-mixed together to obtain a mixed paste. Further, as for the solvent with which each material is dispersed and mixed, either of an aqueous solvent and an organic solvent can be used. That is, the solvent can be chosen according to the used materials. The aqueous solvent is more preferred in view of the production cost including the equipment cost and environmental hygiene. Examples of the wet-type mixing apparatus used in the process 2-1 include those mentioned above for the process 1-1 for the first carbon catalyst granule.

In the cases where each raw material cannot be uniformly dissolved, a commercially available disperser may be added, dispersed, and mixed in addition to the other materials in order to improve the wettability and the dispersing property of each raw material into the solvent. As for the disperser, aqueous dispersers and solvent-based dispersers can be used. Specific examples of the disperser include commercially available aqueous dispersers and solvent-based dispersers mentioned above for the process 1-1 for the first carbon catalyst granule.

<Process 2-2> In the process 2-2, a spraying and drying machine such as a spray dryer can be used. Specifically, the solvent may be volatilized and removed while spraying the above-described paste in the form of mist. The spraying condition and the volatizing condition of the solvent can be chosen as desired.

<Process 2-3> Though depending on the carbon material and the compound (E), which are the raw materials, the heating temperature of the process 2-3 is preferably 500 to 1,100°C, and more preferably 700 to 1,000°C.

The heating temperature is preferably 700 to 1,000°C because the structure of the active sites is stabilized and the resistance of the catalyst surface to oxidation improves in the heating temperature range. Even a catalyst having a high oxygen reduction activity has a poor resistance to oxidation if the structure of its active sites is unstable. Therefore, there is a possibility that its properties could significantly deteriorate. For example, the structure of the active sites gradually decomposes due to the use under a severe oxidation condition. In such cases, the fuel cell cannot be used under a practical cell operating condition. When the heating temperature is lower than 500°C, the compound (E) and the disperser cannot be easily melted and thermally decomposed.

Therefore, the catalyst activity could become lower. On the other hand, when the heating temperature is higher than 1,100°C, the thermal decomposition and the sublimation of the compound (E) become intense. As a result, the base metal-N4 structure and the nitrogen element on the edge, which are the active sites on the surface of the carbon particles, are less likely to remain. Therefore, the catalyst activity could become lower.

As for the atmosphere in the heat treatment, an atmosphere of an inert gas such as nitrogen and argon, or a reducing gas atmosphere in which hydrogen is mixed into an inert gas is preferred. This is because it is necessary to carbonize the compound (E) as much as possible by incomplete combustion and thereby to leave the nitrogen element, the base metal element, and the like on the surfaces of the carbon particles. Further, the heat treatment can be performed under an ammonia gas atmosphere including a large amount of a nitrogen element in order to prevent the decrease of the nitrogen element in the carbon catalyst during the heat treatment.

Further, the heat treatment does not necessarily have to be performed at a fixed temperature in a single process. For example, when two or more compounds (E) having different decomposition temperatures are mixed, the heat treatment can be divided into several stages with different heating temperatures in accordance with the decomposition temperature of each component. In this way, more active sites could be efficiently left in some cases.

Examples of the method of manufacturing the second carbon catalyst granule according to the present invention also include a method including a process for washing the carbon catalyst granules (sintered body) obtained by the above-described heat treatment by using an acid and drying the washed carbon catalyst. The acid used in this process is not limited to any particular acids, provided that they can elute the base metal component that exists on the surface of the carbon catalyst granule obtained by the above-described heat treatment and does not act as an active site. Preferred acids include a concentrated hydrochloric acid and a dilute sulfuric acid that have a low reactivity with the carbon catalyst and a strong dissolving power for the base metal component. As a specific washing method, an acid and the carbon catalyst granules are added in a glass vessel and the contents are stirred for several hours while dispersing them. Then, the glass vessel is left at a standstill and the supernatant liquid is removed. Then, the above-described method is repeated until the color of the supernatant liquid disappears. Finally, the acid is removed by filtration and water-washing, and the remained substance is dried. The carbon catalyst including a carbon element near a nitrogen element on the edge as a catalyst active site is preferred because the base metal component that does not act as the active site on the surface is removed by the acid washing and the catalyst activity is thereby improved.

Examples of the method of manufacturing the second carbon catalyst granule according to the present invention also include a method including a process for heat-treating the carbon catalyst granules obtained by the above-described acid washing again. The conditions of this heat treatment are not significantly different from those of the previous heat treatment. The heating temperature is preferably 500 to 1,100°C, and more preferably 700 to 1,000°C. Further, in view of the fact that the nitrogen element on the surface is less likely to be decomposed and decreased, the atmosphere is preferably an atmosphere of an inert gas such as nitrogen and argon, a reducing gas atmosphere in which hydrogen is mixed into an inert gas, or an ammonia gas atmosphere including a large amount of a nitrogen element.

It should be noted that when a carbon catalyst is used instead of using platinum-based catalyst, there are problems unique to the carbon alloys. Specifically, in the carbon alloys, there are cases where hydrogen peroxide is generated as an intermediate byproduct due to the 2-electron reduction reaction of oxygen and hence the electrolyte film and the active sites could be decomposed and deteriorated. However, the active site density increases by the granulation of the carbon alloy. Therefore, even if hydrogen peroxide is generated as a byproduct, it can be immediately reduced to water in nearby active sites. Therefore, the deterioration of the electrolyte film and the active sites due to hydrogen peroxide can be suppressed, thus increasing the durability. Note that in the platinum-based catalysts, the 4-electron reduction reaction of oxygen mainly progresses and no hydrogen peroxide is generated as a byproduct. Therefore, the platinum-based catalysts do not suffer from the above-described durability problem caused by hydrogen peroxide.

According to the first carbon catalyst granule and the second carbon catalyst granule (they are collectively referred to as "carbon catalyst granule") in accordance with the present invention, the dispersing property can be improved through the granulating process. Further, by adding a disperser to the cell catalyst composition, the power generation efficiency can be improved more effectively when a fuel cell is manufactured. This can improve the property of dispersing into a solvent, in particular, a hydrophilic solvent by using a disperser when catalyst ink is manufactured. This is especially effective for carbon catalyst granules whose surfaces tend to become hydrophobic.

According to the cell catalyst composition using the carbon catalyst granules in accordance with the present invention, the carbon catalyst has excellent characteristics as an alternative catalyst to the noble metal element catalyst such as a platinum catalyst. Further, the present invention can provide a cell catalyst composition capable of solving problems including a low bulk density of a carbon catalyst, which arises when a carbon catalyst is used as a substitute for a noble metal catalyst, poor production efficiency, which arises in a catalyst ink manufacturing process due to the low bulk density, and poor power generation efficiency per unit volume, which arises when a fuel cell is manufactured. According to the manufacturing method of a carbon catalyst granule in accordance with the present invention, carbon catalyst granules having an average particle diameter of 0.5 to 100 µm can be easily obtained without including any noble metal element such as platinum therein. Therefore, the production efficiency of a catalyst ink manufacturing process can be improved. Further, since the carbon catalyst granule is manufactured by uniformly dispersing and mixing a fine carbon catalyst (A) having a large specific surface and a resin (B), an oxygen reduction reaction can be efficiently carried out on the surface of the fine carbon catalyst (A). Further, in addition to the fact that the surface of the carbon catalyst (A) is bound with the resin (B) by a hydrogen bonding action and an acid-basic bonding action, an aggregated state in which the density of the carbon catalyst (A) is high can be formed through the above-described process in which the mixture is sprayed/dried and thereby granulated.

[Catalyst ink] Next, an example in which a cell catalyst composition according to the present invention is used for catalyst ink is explained. Catalyst ink according to the present invention includes at least a first carbon catalyst granule and/or a second carbon catalyst granule (hereinafter simply referred to as "carbon catalyst granule"), a binder resin, and a solvent. For the binder resin, a material having proton conductivity and oxidation resistance is preferably used. Further, the binder resin includes at least a resin (B) having a hydrophilic functional group. The ratio among the carbon catalyst granules, the binder resin, and the solvent is not limited to any particular value range and can be chosen as desired.

Since the carbon catalyst granules according to the present invention are relatively large granules having an average particle diameter of 0.5 to 100 µm and have an excellent dispersing property, the concentration of the carbon catalyst granules in the catalyst ink can be easily raised. Therefore, it is possible to obtain high-concentration catalyst ink in which the concentration of the carbon catalyst granules is 20 to 50 mass% by optimizing the ink prescription. Such catalyst ink can be suitably used when the thickness of a catalyst layer needs to be increased.

<Binder resin> For the binder resin, a resin having proton conductivity is preferably used. Examples of the proton-conductive resin include those mentioned in <Resin (B) including hydrophilic functional group>. In particular, the perfluoro sulfonic acid-based resins have high chemical stability since they include fluorine atoms having a high electronegativity. Further, since the dissociation property of their sulfonic acid group is high, the perfluoro sulfonic acid-based resins have high proton conductivity. Accordingly, the perfluoro sulfonic acid-based resins are useful and preferred. Specific examples of the perfluoro sulfonic acid-based resins include "Nafion" manufactured by Du Pont, "Flemion" manufactured by Asahi Glass Co., Ltd., "Aciplex" manufactured by Asahi Kasei Corporation, and "Gore Select" manufactured by Gore. In general, a resin having proton conductivity can be commercially acquired as an alcohol-water solution having a solid content concentration of 5 to 30 mass%. Examples of the alcohol include methanol, propanol, and ethanol diethylether. Only one type of a binder may be used, or two or more types of binders may be used together.

The ratio between the carbon catalyst granules and the binder included in the catalyst ink is not limited to any particular value range. The amount of the binder with respect to 100 pts.mass of the carbon catalyst is preferably 10 to 300 pts.mass and more preferably 20 to 250 pts.mass. When the first carbon catalyst granule is used, the amount of the binder is preferably determined with consideration given to the amount of the resin (B) having a hydrophilic functional group included in the carbon catalyst granule. Specifically, it is preferable that the total amount of the resin (B) having a hydrophilic functional group and the binder with respect to 100 pts.mass of the carbon catalyst in the catalyst layer is equal to or less than 100 pts.mass. When the total amount of the resin (B) having a hydrophilic functional group and the binder is larger than 100 pts.mass, the amount of the carbon catalyst contained in the catalyst layer become a half of the catalyst layer or smaller. Therefore, the power generation efficiency could deteriorate, thus lowering the practicality.

<Solvent> There is no particular restriction on the solvent. Further, only one type of a solvent may be used, or two or more types of solvents may be mixed and used together. The main solvent is preferably water or a solvent having a high affinity to water. In particular, alcohol can be suitably used. For the alcohol, monohydric alcohol having a boiling point of 80 to 200°C or polyhydric alcohol can be used. Further, alcohol having a carbon number of 4 or less is preferably used. Examples of the alcohol having a carbon number of 4 or less include 1-propanol, 2-propanol, 1-butanol, 2-butanol, and t-butanol. Examples of the monohydric alcohol include 2-propanol, 1-butanol, and t-butanol. As for the polyhydric alcohol, in view of the compatibility with the resin having proton conductivity and the drying efficiency of the catalyst ink, propylene glycol and ethylene glycol are preferred, and propylene glycol is more preferred. When the first carbon catalyst granule is used, a solvent in which the resin (B) having a hydrophilic functional group, which is a binding material, is not easily dissolved, is preferably used so that the carbon catalyst granule maintains its shape in the catalyst ink.

<Disperser> For the catalyst ink according to the present invention, a disperser may be used in order to improve the wettability and the dispersing property of the carbon catalyst granule into the solvent. The amount of the disperser in the catalyst ink is 0.01 to 5 mass% and preferably 0.02 to 3 mass% with respect to the mass of the carbon catalyst granules contained in the catalyst ink. By adjusting the amount within this range, a satisfactory dispersion stability of the carbon catalyst granules can be achieved. Further, the condensation of the carbon catalyst granules can be effectively prevented and the precipitation of the disperser on the catalyst layer surface can be also prevented. There is no particular restriction on the disperser. That is, the disperser can be chosen as desired with consideration given to the affinity to the solvent. When water or a solvent having a high affinity to water is used as the main solvent, an aqueous disperser is preferred.

Examples of commercially available dispersers include those mentioned in <Resin (B) including hydrophilic functional group>. Further, examples includes disperses manufactured by Nittetsu Mining Co., Ltd. such as an iron phthalocyanine derivative (ammonium sulfonate).

There is no particular restriction on the manufacturing method of the catalyst ink. Each component may be simultaneously dispersed and mixed. Alternatively, the carbon catalyst granules may be first dispersed by using a disperser, and then a binder may be added. That is, the manufacturing method of the catalyst ink can be optimized according to the types of the carbon catalyst granules, the binder, and the solvent to be used. The apparatus that disperses and mixes the carbon catalyst granules and the binder in the solvent is not limited to any particular apparatuses. However, a homogenizer and a medium-less dispersing apparatus, which are less likely to break the carbon catalyst granules during the dispersing/mixing process, are preferred.

According to the cell catalyst composition in accordance with the present invention, carbon catalyst granules can be easily dispersed in a solvent by using a small amount of a binder component, and hence high-concentration catalyst ink having high dispersion stability can be provided. Further, this catalyst ink makes it possible to easily manufacture a thick catalyst layer having a high density and thereby provide a fuel cell having excellent power generation efficiency par volume.

[Fuel cell] The carbon catalyst granule according to the present invention can be used for an anode electrode or a cathode electrode of a fuel cell. Preferably, the carbon catalyst granule may be used for a cathode electrode. A fuel cell in which carbon catalyst granules according to the present invention is applied to its anode electrode or cathode electrode is explained hereinafter.

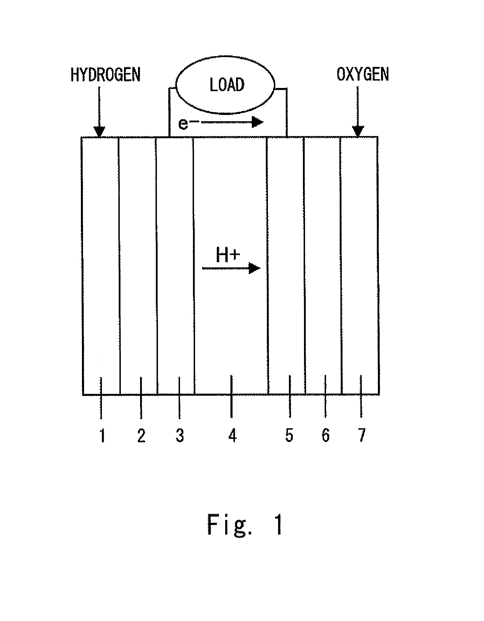

Fig. 1 shows a schematic view of an example of main parts of a fuel cell according to the present invention. The fuel cell includes a cell including a separator 1, a gaseous diffusion layer 2, an anode electrode catalyst layer (fuel electrode) 3, a cathode electrode catalyst layer (air electrode) 5, a gaseous diffusion layer 6, and a separator 7, and so on, which are arranged to be opposed to their respective counterpart components with a solid polymer electrolyte 4 interposed therebetween. Further, the fuel cell includes an external circuit and so on. The gaseous diffusion layer 2 and the anode electrode catalyst layer 3 function as an electrode unit. Further, the cathode electrode catalyst layer 5 and the gaseous diffusion layer 6 function as another electrode unit. In general, a plurality of cells are stacked according to the required output, and thus forming a stacked cell. The material for the solid polymer electrolyte 4 is not limited to any particular materials except that it must not deviate from the gist of the present invention. However, preferred examples include fluorine-based cation exchange resin membranes typified by perfluoro sulfonic acid resin membranes. Specific examples include "Nafion" manufactured by Du Pont.

Further, the anode electrode catalyst layer 3 and the cathode electrode catalyst layer 5 composed of a catalyst layer including carbon catalyst granules according to the present invention are formed on both sides of the solid polymer electrolyte 4. Then, they are stuck together and unified as a MEA (Membrane Electrode Assembly) by, for example, hot-pressing.

Recently, since a carbon catalyst has a large specific surface, a simple and inexpensive fuel cell structure having no gaseous diffusion layer, which is obtained by giving a gas diffusion function to its carbon catalyst, has been proposed. Since the carbon catalyst granules according to the present invention are a material that can be packed in a limited volume with a high packing density, they can be used as a gaseous diffusion layer.

The aforementioned separators 1 and 7 supply and discharge reactive gases such as fuel gas (hydrogen) and an oxidizer gas (oxygen). Further, when the reactive gases are uniformly supplied to the anode and cathode electrode catalyst layers 3 and 5 through the gaseous diffusion layers 2 and 6, respectively, a three-phase interface of a gas phase (reactive gases), a liquid phase (solid polymer electrolyte), and a solid phase (catalysts of both electrodes) is formed in the interface between the solid polymer electrolyte 4 and carbon catalyst granules included in the anode and cathode electrode catalyst layers 3 and 5. Therefore, an electrochemical reaction occurs and a DC (Direct Current) current flows.

The below-shown reactions occur in the electrodes.
Cathode side: O₂+4H++4e⁻ -> 2H₂O
Anode side: H₂ -> 2H++2e⁻

H+ ions generated on the anode side move toward the cathode side through the solid polymer electrolyte 4, and e⁻ (electros) generated on the anode side move toward the cathode side through an external load. Further, those H⁺ ions and e⁻ (electrons) coming from the anode side react with oxygen included in the oxidizer gas on the cathode side and water is thereby generated. As a result, the above-described fuel cell generates DC power and generates water from hydrogen and oxygen.

### [Electrode material]

The electrode material used in the cell catalyst composition according to the present invention is explained. An electrode material according to the present invention includes at least a first carbon catalyst granule and/or a second carbon catalyst granule, and a binder resin. The electrode material according to the present invention can be suitably used as an anode catalyst layer and/or a cathode catalyst layer of the above-described polymer electrolyte fuel cell. In addition, the electrode material can also be used as an electrode material for cells (i.e., batteries) including various fuel cells and as electrode material for various electronic components.

Although exemplary embodiments according to the present invention have been explained above, the present invention is not limited to the above-described configurations. That is, various modifications can be made to those configurations without departing from the scope of the present invention.

<Examples> The present invention is explained hereinafter in a more detailed manner. However, the present invention is not limited to the below-shown examples. In the following examples, the units "pts." and "%" represent "pts.mass" and "mass%", respectively.

The analyses of carbon catalyst granules and carbon catalysts were carried out by using the following measuring devices.
- Detection of nitrogen element: CHN element analysis (2400-type CHN element analyzing apparatus manufactured by PerkinElmer Co., Ltd.)
- Detection of base metal element: ICP emission spectrochemical analysis (SPECTRO ARCOS FHS12 manufactured by SPECTRO)
- Observation of particle shape: SEM (Scanning Electron Microscope) (SEM S-4300 manufactured by Hitachi, Ltd.)
- Measurement of average particle diameter: Particle size distribution meter (d-50 value measured by Mastersizer 2000 manufactured by Malvern Instruments) A powder of carbon catalyst granules was placed inside a measurement cell and a value was measured (i.e., read) when the signal level indicated an optimal value.
- Measurement of BET specific surface: Gas absorption measurement (BELSORP-mini manufactured by BEL Japan, Inc.)
- Measurement of tap density: (USP tap density measuring device manufactured by Hosokawa Micron Ltd.)

### [First carbon catalyst granule]

### <Synthesis of carbon catalyst (A)>

[Manufacture Example 1-1: Carbon catalyst (A1-1)] A precursor was obtained by weighing cobalt phthalocyanine (manufactured by Tokyo Chemical Industry Co., Ltd.) and Ketjen black (EC-600JD manufactured by Lion Corporation) so that their weight ratio became 1:1, and dry-mixing them in a mortar. The above-described precursor powder was put in a crucible made of alumina and heat-treated at 800°C for two hours under a nitrogen atmosphere by an electric furnace. Then, a carbon catalyst (A1-1) was obtained by pulverizing the obtained carbide in a mortar. The molar ratio "N (nitrogen)/C (carbon)" of the carbon catalyst (A1-1) obtained by a CHN element analysis was 0.06, and the molar ratio "Co (cobalt)/C (carbon)" obtained by an ICP emission spectrochemical analysis and a CHN element analysis was 0.012. Further, the BET specific surface was 398 m²/g and the tap density was 0.08 g/cm³.

[Manufacture Example 1-2: Carbon catalyst (A1-2)]A precursor was obtained by weighing iron phthalocyanine (manufactured by Sanyo Color Works, Ltd.) and Ketjen black (EC-600JD manufactured by Lion Corporation) so that their weight ratio became 1:1, and dry-mixing them in a mortar. The above-described precursor powder was put in a crucible made of alumina and heat-treated at 700°C for two hours under a nitrogen atmosphere by an electric furnace. Then, a carbon catalyst (A1-2) was obtained by pulverizing the obtained carbide in a mortar. The molar ratio "N (nitrogen)/C (carbon)" of the carbon catalyst (A1-2) obtained by a CHN element analysis was 0.13, and the molar ratio "Fe (iron)/C (carbon)" obtained by an ICP emission spectrochemical analysis and a CHN element analysis was 0.013. Further, the BET specific surface was 295 m²/g and the tap density was 0.08 g/cm³.

[Manufacture Example 1-3: Carbon catalyst (A1-3)] A precursor was obtained by weighing cobalt phthalocyanine (manufactured by Tokyo Chemical Industry Co., Ltd.) and graphene nano-platelets (xGnP-C-750 manufactured by XGSciences) so that their weight ratio became 1:1, and dry-mixing them in a mortar. The above-described precursor powder was put in a crucible made of alumina and heat-treated at 800°C for two hours under a nitrogen atmosphere by an electric furnace. Then, a carbon catalyst (A1-3) was obtained by pulverizing the obtained carbide in a mortar. The molar ratio "N (nitrogen)/C (carbon)" of the carbon catalyst (A1-3) obtained by a CHN element analysis was 0.06, and the molar ratio "Co (cobalt)/C (carbon)" obtained by an ICP emission spectrochemical analysis and a CHN element analysis was 0.014. Further, the BET specific surface was 146 m²/g and the tap density was 0.09 g/cm³.

[Manufacture Example 1-4: Carbon catalyst (A1-4)]A precursor was obtained by weighing iron phthalocyanine (manufactured by Sanyo Color Works, Ltd.) and graphene nano-platelets (xGnP-C-750 manufactured by XGSciences) so that their weight ratio became 1:1, and dry-mixing them in a mortar. The above-described precursor powder was put in a crucible made of alumina and heat-treated at 700°C for two hours under a nitrogen atmosphere by an electric furnace. Then, a carbon catalyst (A1-4) was obtained by pulverizing the obtained carbide in a mortar. The molar ratio "N (nitrogen)/C (carbon)" of the carbon catalyst (A1-4) obtained by a CHN element analysis was 0.13, and the molar ratio "Fe (iron)/C (carbon)" obtained by an ICP emission spectrochemical analysis and a CHN element analysis was 0.014. Further, the BET specific surface was 140 m²/g and the tap density was 0.09 g/cm³.

[Manufacture Example 1-5: Carbon catalyst (A1-5)] A phenolic resin (PSM-4326 manufactured by Gunei Chemical Industry Co., Ltd.) and iron phthalocyanine (manufactured by Sanyo Color Works, Ltd.) were weighed so that their weight ratio became 3.3:1 and they are wet-mixed in acetone. A precursor was obtained by vacuum-distilling the above-described mixture and then pulverizing the distilled mixture in a mortar. A carbon sintered body (1) was obtained by putting the above-described precursor powder in a crucible made of alumina and heat-treating it at 600°C for two hours under a nitrogen atmosphere by an electric furnace. The above-described carbon sintered body (1) was brought into a slurry state in a concentrated hydrochloric acid again and left at a standstill so that the carbon sintered body (1) was precipitated. Then, the supernatant liquid was removed. The above-described process was repeated until the color of the supernatant liquid disappeared. After the resultant substance was filtered, water-washed, and dried, the dried substance was pulverized in a mortar. A carbon sintered body (2) was obtained by putting the pulverized substance in a crucible made of alumina and heat-treating it at 800°C for one hour under an ammonia atmosphere by an electric furnace. The above-described carbon sintered body (2) was brought into a slurry state in a concentrated hydrochloric acid again and left at a standstill so that the carbon sintered body was precipitated. Then, the supernatant liquid was removed. The above-described process was repeated until the color of the supernatant liquid disappeared. Then, the resultant substance was filtered, water-washed, and dried. A carbon catalyst (A1-5) was obtained by pulverizing the dried substance in a mortar. The molar ratio "N (nitrogen)/C (carbon)" of the carbon catalyst (A1-5) obtained by a CHN element analysis was 0.02, and the molar ratio "Fe (iron)/C (carbon)" obtained by an ICP emission spectrochemical analysis and a CHN element analysis was 0.002. Further, the BET specific surface was 440 m²/g and the tap density was 0.13 g/cm³.

[Manufacture Example 1-6: Carbon catalyst (A1-6)]A polyvinylpyridine iron complex was obtained by dissolving polyvinylpyridine (PVP manufactured by Aldrich) into dimethylformamide, adding iron chloride hexahydrate in the solution in a weight ratio of 2:1 with respect to the PVP, and stirring the solution at a room temperature for 24 hours. A precursor was obtained by weighing the above-described polyvinylpyridine and Ketjen black (EC-600JD manufactured by Lion Corporation) so that their weight ratio became 1:1, and dry-mixing them in a mortar. The above-described precursor powder was put in a crucible made of alumina and heat-treated at 800°C for two hours under a nitrogen atmosphere by an electric furnace. Then, a carbon catalyst (A1-6) was obtained by pulverizing the obtained carbide in a mortar. The molar ratio "N (nitrogen)/C (carbon)" of the carbon catalyst (A1-6) obtained by a CHN element analysis was 0.25, and the molar ratio "Fe (iron)/C (carbon)" obtained by an ICP emission spectrochemical analysis and a CHN element analysis was 0.01. Further, the BET specific surface was 200 m²/g and the tap density was 0.08 g/cm³.

[Manufacture Example 1-7: Carbon catalyst (A1-7)] A precursor was obtained by weighing iron phthalocyanine (manufactured by Sanyo Color Works, Ltd.), iron chloride, and graphene nano-platelets (xGnP-C-750 manufactured by XGSciences) so that their weight ratio became 0.8:0.2:1, and dry-mixing them in a mortar. The above-described precursor powder was put in a crucible made of alumina and heat-treated at 700°C for two hours under a nitrogen atmosphere by an electric furnace. Then, a carbon catalyst (A1-7) was obtained by pulverizing the obtained carbide in a mortar. The molar ratio "N (nitrogen)/C (carbon)" of the carbon catalyst (A1-7) obtained by a CHN element analysis was 0.14, and the molar ratio "Fe (iron)/C (carbon)" obtained by an ICP emission spectrochemical analysis and a CHN element analysis was 0.016. Further, the BET specific surface was 130 m²/g and the tap density was 0.12 g/cm³.

### <Manufacture of first carbon catalyst granule>

[Example 1-101: Carbon catalyst granule (1-1)] A uniform dispersion solution was manufactured by weighing 39 parts of ion-exchange water, 39 parts of 1-propanol, and 15 parts of a DE2020 CS-type Nafion solution (manufactured by Du Pont: a water-alcohol mixed solution having a solid content of 20%), which was a proton-conductive resin including a sulfonic acid group, and putting them in a glass bottle. After that, 7 parts of the carbon catalyst (A1-1) manufactured in Manufacture Example 1-1 were added and zirconia beads were also added as a medium. Then, a carbon catalyst (A1-1) dispersion body (solid content 10%) was obtained by dispersing the contents by a paint shaker. This dispersion body was sprayed and dried in a nitrogen gas stream under a 125°C atmosphere by using a mini-spray dryer ("B-290" manufactured by Nihon-Buchi K.K.). As a result, carbon catalyst granules (1-1) having an average particle diameter of about 12 µm, a tap density of 0.28 g/cm³, and a sphericity of 0.9 were obtained.

[Example 1-102: Carbon catalyst granule (1-2)] A carbon catalyst (A1-2) dispersion body (solid content 10%) was obtained by a method similar to that for Example 1-101 by using the carbon catalyst (A1-2) manufactured in Manufacture Example 1-2. This dispersion body was sprayed and dried in a nitrogen gas stream under a 125°C atmosphere by using a mini-spray dryer ("B-290" manufactured by Nihon-Buchi K.K.). As a result, carbon catalyst granules (1-2) having an average particle diameter of about 10 µm, a tap density of 0.27 g/cm³, and a sphericity of 0.9 were obtained.

[Example 1-103: Carbon catalyst granule (1-3)] A carbon catalyst (A1-3) dispersion body (solid content 10%) was obtained by a method similar to that for Example 1-101 by using the carbon catalyst (A1-3) manufactured in Manufacture Example 1-3. This dispersion body was sprayed and dried in a nitrogen gas stream under a 125°C atmosphere by using a mini-spray dryer ("B-290" manufactured by Nihon-Buchi K.K.). As a result, carbon catalyst granules (1-3) having an average particle diameter of about 10 µm, a tap density of 0.25 g/cm³, and a sphericity of 0.85 were obtained.

[Example 1-104: Carbon catalyst granule (1-4)] A carbon catalyst (A1-4) dispersion body (solid content 10%) was obtained by a method similar to that for Example 1-101 by using the carbon catalyst (A1-4) manufactured in Manufacture Example 1-4. This dispersion body was sprayed and dried in a nitrogen gas stream under a 125°C atmosphere by using a mini-spray dryer ("B-290" manufactured by Nihon-Buchi K.K.). As a result, carbon catalyst granules (1-4) having an average particle diameter of about 8 µm, a tap density of 0.26 g/cm³, and a sphericity of 0.85 were obtained.

[Example 1-105: Carbon catalyst granule (1-5)] A carbon catalyst (A1-5) dispersion body (solid content 10%) was obtained by a method similar to that for Example 1-101 by using the carbon catalyst (A1-5) manufactured in Manufacture Example 1-5. This dispersion body was sprayed and dried in a nitrogen gas stream under a 125°C atmosphere by using a mini-spray dryer ("B-290" manufactured by Nihon-Buchi K.K.). As a result, carbon catalyst granules (1-5) having an average particle diameter of about 8 µm, a tap density of 0.3 g/cm³, and a sphericity of 0.8 were obtained.

[Example 1-106: Carbon catalyst granule (1-6)] A carbon catalyst (A1-6) dispersion body (solid content 10%) was obtained by a method similar to that for Example 1-101 by using the carbon catalyst (A1-6) manufactured in Manufacture Example 1-6. This dispersion body was sprayed and dried in a nitrogen gas stream under a 125°C atmosphere by using a mini-spray dryer ("B-290" manufactured by Nihon-Buchi K.K.). As a result, carbon catalyst granules (1-6) having an average particle diameter of about 7 µm, a tap density of 0.29 g/cm³, and a sphericity of 0.8 were obtained.

[Example 1-107: Carbon catalyst granule (1-7)] A uniform aqueous solution was manufactured by weighing 76.3 parts of ion-exchange water and 16.7 parts of a poly(4-styrene sulfonic acid) aqueous solution (manufactured by Sigma-Aldrich Co., Ltd.: an aqueous solution having a solid content of 18% and an average molecular weight of 75,000), which was a proton-conductive resin including a sulfonic acid group, and putting them in a glass bottle. After that, 7 parts of the carbon catalyst (A1-4) manufactured in Manufacture Example 1-4 were added and zirconia beads were also added as a medium. Then, a carbon catalyst (A1-4) dispersion body (solid content 10%) was obtained by dispersing the contents by a paint shaker. This dispersion body was sprayed and dried in a nitrogen gas stream under a 125°C atmosphere by using a mini-spray dryer ("B-290" manufactured by Nihon-Buchi K.K.). As a result, carbon catalyst granules (1-7) having an average particle diameter of about 12 µm, a tap density of 0.28 g/cm³, and a sphericity of 0.85 were obtained.

[Example 1-122: Carbon catalyst granule (1-22)] A carbon catalyst (A1-7) dispersion body (solid content 10%) was obtained by a method similar to that for Example 1-101 by using the carbon catalyst (A1-7) manufactured in Manufacture Example 1-7. This dispersion body was sprayed and dried in a nitrogen gas stream under a 125°C atmosphere by using a mini-spray dryer ("B-290" manufactured by Nihon-Buchi K.K.). As a result, carbon catalyst granules (1-22) having an average particle diameter of about 7 µm, a tap density of 0.31 g/cm³, and a sphericity of 0.75 were obtained.

[Example 1-108: Carbon catalyst granule (1-8)] A uniform aqueous solution was manufactured by weighing 84.4 parts of ion-exchange water and 8.6 parts of a polyacrylic acid aqueous solution (manufactured by Sigma-Aldrich Co., Ltd.: an aqueous solution having a solid content of 35% and an average molecular weight of 100,000), which was a resin including a carboxylic acid group, and putting them in a glass bottle. After that, 7 parts of the carbon catalyst (A1-2) manufactured in Manufacture Example 1-2 were added and zirconia beads were also added as a medium. Then, a carbon catalyst (A1-2) dispersion body (solid content 10%) was obtained by dispersing the contents by a paint shaker. This dispersion body was sprayed and dried in a nitrogen gas stream under a 125°C atmosphere by using a mini-spray dryer ("B-290" manufactured by Nihon-Buchi K.K.). As a result, carbon catalyst granules (1-8) having an average particle diameter of about 10 µm, a tap density of 0.27 g/cm³, and a sphericity of 0.85 were obtained.

[Example 1-109: Carbon catalyst granule (1-9)] A uniform aqueous solution was manufactured by weighing 90 parts of ion-exchange water and 3 parts of a resin including a hydroxyl group: polivinyl alcohol (manufactured by Sigma-Aldrich Co., Ltd.: solid, average molecular weight 130,000) and putting them in a glass bottle. After that, 7 parts of the carbon catalyst (A1-4) manufactured in Manufacture Example 1-4 were added and zirconia beads were also added as a medium. Then, a carbon catalyst (A1-4) dispersion body (solid content 10%) was obtained by dispersing the contents by a paint shaker. This dispersion body was sprayed and dried in a nitrogen gas stream under a 125°C atmosphere by using a mini-spray dryer ("B-290" manufactured by Nihon-Buchi K.K.). As a result, carbon catalyst granules (1-9) having an average particle diameter of about 11 µm, a tap density of 0.27 g/cm³, and a sphericity of 0.85 were obtained.

[Example 1-110: Carbon catalyst granule (1-10)] A uniform aqueous solution was manufactured by weighing 40.25 parts of ion-exchange water, 40.25 parts of 1-propanol, 7.5 parts of a proton-conductive resin including a sulfonic acid group: a Nafion solution (manufactured by Du Pont: a water-alcohol mixed solution having a solid content of 20%), and 5 parts of Joncryl JDX-6500 (manufactured by BASF Japan Ltd.: an aqueous solution having a solid content of 30%), which was a resin-type disperser including a carboxylic acid group, and putting them in a glass bottle. After that, 7 parts of the carbon catalyst (A1-2) manufactured in Manufacture Example 1-2 were added and zirconia beads were also added as a medium. Then, a carbon catalyst (A1-2) dispersion body (solid content 10%) was obtained by dispersing the contents by a paint shaker. This dispersion body was sprayed and dried in a nitrogen gas stream under a 125°C atmosphere by using a mini-spray dryer ("B-290" manufactured by Nihon-Buchi K.K.). As a result, carbon catalyst granules (1-10) having an average particle diameter of about 8 µm, a tap density of 0.25 g/cm³, and a sphericity of 0.9 were obtained.

[Example 1-111: Carbon catalyst granule (1-11)] A uniform dispersion solution was manufactured by weighing 32.74 parts of ion-exchange water, 41 parts of 1-propanol, and 10 parts of a DE2020 CS-type Nafion solution (manufactured by Du Pont: a water-alcohol mixed solution having a solid content of 20%), which was a proton-conductive resin including a sulfonic acid group, and 9.26 parts of hydrophilic oxide particles: colloidal silica (Snowtex) (manufactured by Nissan Chemical Industries, Ltd.: an aqueous solution having a solid content of 10.8% and an average particle diameter of 5.0 nm) and putting them in a glass bottle. After that, 7 parts of the carbon catalyst (A1-4) manufactured in Manufacture Example 4 were added and zirconia beads were also added as a medium. Then, a carbon catalyst (A1-4) dispersion body (solid content 10%) was obtained by dispersing the contents by a paint shaker. This dispersion body was sprayed and dried in a nitrogen gas stream under a 125°C atmosphere by using a mini-spray dryer ("B-290" manufactured by Nihon-Buchi K.K.). As a result, carbon catalyst granules (1-11) having an average particle diameter of about 8 µm, a tap density of 0.28 g/cm³, and a sphericity of 0.85 were obtained.

[Example 1-112: Carbon catalyst granule (1-12)] A uniform dispersion solution was manufactured by weighing 32 parts of ion-exchange water, 41 parts of 1-propanol, 10 parts of a DE2020 CS-type Nafion solution (manufactured by Du Pont: a water-alcohol mixed solution having a solid content of 20%), which was a resin including a sulfonic acid group, and 10 parts of an alumina sol A-2 (manufactured by Kawaken Fine Chemicals Co., Ltd.: an aqueous solution having a solid content of 10.0% and an average particle diameter of 12 nm) and putting them in a glass bottle. After that, 7 parts of the carbon catalyst (A1-4) manufactured in Manufacture Example 1-4 were added and zirconia beads were also added as a medium. Then, a carbon catalyst (A1-4) dispersion body (solid content 10%) was obtained by dispersing the contents by a paint shaker. This dispersion body was sprayed and dried in a nitrogen gas stream under a 125°C atmosphere by using a mini-spray dryer ("B-290" manufactured by Nihon-Buchi K.K.). As a result, carbon catalyst granules (1-12) having an average particle diameter of about 8 µm, a tap density of 0.27 g/cm³, and a sphericity of 0.8 were obtained.

[Comparative Examples 1-116 to 1-121: Carbon catalysts (A1-1) to (A1-6)] The carbon catalysts (A1-1) to (A1-6) obtained in Manufacture Examples 1-1 to 1-6 were used as they were without granulating them.

### <Oxygen reduction activity evaluation of carbon catalyst>

The oxygen reduction activities of the carbon catalysts obtained in Manufacture Examples 1-1 to 1-6 were evaluated by using electrodes that were obtained by dispersing these carbon catalysts on glassy carbon. Details of the evaluation method were as follows.

### (1) Ink-forming method

Carbon catalyst ink was manufactured by weighing 0.01 parts of a carbon catalyst, adding 3.56 parts of a mixed solution (solid content 0.21%) of water, propanol, and butanol in which Nafion (manufactured by Du Pont) was dispersed as a solid polymer catalyst, and then performing a dispersing process by ultrasound (45 Hz) for 15 minutes.

### (2) Working electrode manufacturing method

A working electrode was manufactured by polishing the surface of a rotating electrode (a glassy carbon electrode having a radius of 0.2 cm) into a specular surface, dropping 3.5 µL of the above-described carbon catalyst ink on the electrode surface, spin-coating the electrode surface with the carbon catalyst ink at 1,500 rpm, and air-drying the ink-coated electrode surface.

### (3) LSV (Linear Sweep Voltammetry) measurement

An electrolytic solution (0.5M sulfuric acid solution) was put into an electrolytic cell equipped with the above-described manufactured working electrode, a counter electrode (platinum), and a reference electrode (Ag/AgCl), and an oxygen reduction activity test was carried out.

For the oxygen reduction start potential, which serves as an indicator of an oxygen reduction activity level, LVS measurement was carried out by bubbling the electrolytic solution with oxygen and then rotating the working electrode at 2,000 rpm under an oxygen atmosphere. A value that was obtained by carrying out LVS measurement under a nitrogen atmosphere after bubbling the electrolytic solution with nitrogen was used as a background.

The oxygen reduction start potential was obtained by reading a potential at the time when the current density reached -50 µA/cm² and converting this potential into a potential relative to the reversible hydrogen electrode (RHE). The oxygen reduction start potential indicates that the higher this value is, the higher the oxygen reduction activity is. Table 1-1 shows evaluation results.

As a standard sample, the oxygen reduction activity level of a carbon with platinum supported thereon (platinum carrying ratio 50 wt%) was evaluated by the above-described evaluation method. Its oxygen reduction start potential was 0.94V (vs RHE).

**[Table 1-1]**

| | Carbon catalyst (A) | Oxygen reduction start potential (V vs RHE) |
|---|---|---|
| Manufacture Example 1-1 | A1-1 | 0.7 |
| Manufacture Example 1-2 | A1-2 | 0.75 |
| Manufacture Example 1-3 | A1-3 | 0.76 |
| Manufacture Example 1-4 | A1-4 | 0.77 |
| Manufacture Example 1-5 | A1-5 | 0.74 |
| Manufacture Example 1-6 | A1-6 | 0.76 |
| Manufacture Example 1-7 | A1-7 | 0.76 |

As can be seen from Table 1-1, all of the carbon catalysts (A1-1) to (A1-6) of Manufacture Examples exhibited a high oxygen reduction activity.

Next, catalyst inks and fuel cell catalyst layers were manufactured by using carbon catalyst granules (1-1) to (1-12) obtained in the Examples 1-101 to 1-112 and 1-122 and carbon catalysts (A1-1) to (A1-6) of Comparative Examples 1-116 to 1-121, and their cell properties were evaluated.

### <Manufacture of catalyst ink>

### (Examples 1-101 to 1-115 and 1-122: Catalyst inks (1-1) to (1-15) and (1-22))

Catalyst inks (1-1) to (1-12) (solid content concentration 20%, the total ratio of the carbon catalyst, the binding material, and the binder as the amount of the catalyst ink was defined as 100%) were manufactured by weighing 17.14 parts of the carbon catalyst granules (1-1) to (1-12) obtained in Examples 1-101 to 1-112 (12 parts of the carbon catalyst + 5.14 parts of the resin having a hydrophilic functional group), adding the weighed carbon catalyst granules in a mixed solution of 68.57 parts of 1-batanole and 14.29 parts of a Nafion solution (manufactured by Du Pont: a water-alcohol mixed solution having a solid content of 20%), and stirring and mixing the mixture by using a disper (T.K homodisper manufactured by Primix Corporation). Further, as a disperser, catalyst inks (1-13) to (1-15) were manufactured by a method similar to that for the catalyst ink (1-4) except that BYK-190 (manufactured by BYK Japan K.K.: an aqueous type having a solid content concentration 40%), BYK-198 (manufactured by BYK Japan K.K.: an aqueous type having a solid content concentration 40%), and PVP-K30 (manufactured by ISP Japan: solid) were added so that each of them had a solid content of 1.0 parts with respect to the carbon catalyst granules..

### (Comparative Examples 1-116 to 1-121: Catalyst ink (1-16) to (1-21))

Catalyst inks (1-16) to (1-21) (solid content concentration 20 mass%, the total ratio of the carbon catalyst, the binding material, and the binder as the amount of the catalyst ink was defined as 100 mass%) were manufactured by weighing 12 parts of the carbon catalysts (A1-1) to (A1-6) of Comparative Examples 1-116 to 1-121, adding the weighed carbon catalyst in a mixed solution of 48 parts of 1-batanole and 40 parts of a Nafion solution (manufactured by Du Pont: a water-alcohol mixed solution having a solid content of 20%), and stirring and mixing the mixture by using a disper (T.K homodisper manufactured by Primix Corporation).

### <Evaluation of catalyst ink>

The dispersing properties of catalyst inks were evaluated by the below-shown evaluation method.

### (Dispersing property evaluation)

For the dispersing property, particle sizes (diameters of large distributed particles) of catalyst ink were obtained by measurement using a grind gauge (in accordance with JIS K5600-2-5). Then, when there were no aggregates equal to or larger than 50 µm, the dispersing property was determined to be excellent. The particle sizes of the catalyst inks of Examples 1-101 to 1-115 and 1-122 were all 20 to 30 µm and hence their dispersing properties were all excellent. In contrast to this, aggregated particles equal to or greater than 100 µm were observed in the catalyst inks of Comparative Examples 1-116 to 1-121 and hence their dispersing properties were observed to be poorer.

Table 1-2 shows the mixed compositions of catalyst inks and their dispersing property evaluation results.

**[Table 1-2]**

| | Catalyst ink | | | |
|---|---|---|---|---|
| | Carbon catalyst granule | Carbon catalyst(A) | Dispersing property evaluation (Particle size; µm) | Disperser |
| Example 1-101 | 1-1 | (A1-1) | 30 | - |
| Example 1-102 | 1-2 | (A1-2) | 30 | - |
| Example 1-103 | 1-3 | (A1-3) | 30 | - |
| Example 1-104 | 1-4 | (A1-4) | 30 | - |
| Example 1-105 | 1-5 | (A1-5) | 30 | - |
| Example 1-106 | 1-6 | (A1-6) | 30 | - |
| Example 1-107 | 1-7 | (A1-4) | 20 | - |
| Example 1-122 | 1-22 | (A1-7) | 20 | - |
| Example 1-108 | 1-8 | (A1-2) | 20 | - |
| Example 1-109 | 1-9 | (A1-4) | 20 | - |
| Example 1-110 | 1-10 | (A1-2) | 20 | - |
| Example 1-111 | 1-11 | (A1-4) | 30 | - |
| Example 1-112 | 1-12 | (A1-4) | 30 | - |
| Example 1-113 | 1-4 | (A1-4) | 20 | BYK-190 |
| Example 1-114 | 1-4 | (A1-4) | 20 | BYK-198 |
| Example 1-115 | 1-4 | (A1-4) | 20 | PVP-K30 |
| Comparative Example 1-116 | - | A1-1 | >100 | - |
| Comparative Example 1-117 | - | A1-2 | >100 | - |
| Comparative Example 1-118 | - | A1-3 | >100 | - |
| Comparative Example 1-119 | - | A1-4 | >100 | - |
| Comparative Example 1-120 | - | A1-5 | >100 | - |
| Comparative Example 1-121 | - | A1-6 | >100 | - |

<Manufacture of fuel cell cathode catalyst layer: Catalyst layer A> Unevenness-free uniform fuel cell cathode catalyst layers were manufactured by applying the catalyst inks of Examples 1-101 to 1-115 and 1-122 on a Teflon (registered trademark) film by using a doctor blade so that the coating weight of the dried carbon catalyst became 2 mg/cm², and drying the applied catalyst inks at 95°C for 15 minutes under an atmospheric atmosphere. In contrast to this, in the case of the catalyst inks of Comparative Examples 1-116 to 1-121, uneven crumbling layers were formed and the coating weight of the carbon catalyst could not reach the target value of 2 mg/cm² and instead was around 1 mg/cm². This seems to be a result in which the particle properties of the carbon catalysts themselves were clearly reflected.

<Manufacture of fuel cell cathode catalyst layer: Catalyst layer B> Unevenness-free uniform fuel cell cathode catalyst layers were manufactured by applying the catalyst inks of Examples 1-101 to 1-115 and 1-122 on a Teflon (registered trademark) film by using a doctor blade so that the coating weight of the dried carbon catalyst became 3 mg/cm², and drying the applied catalyst inks at 95°C for 15 minutes under an atmospheric atmosphere. In contrast to this, in the case of the catalyst inks of Comparative Examples 1-116 to 1-121, uneven crumbling layers were formed and the coating weight of the carbon catalyst could not reach the target value of 2 mg/cm² and instead was around 1 mg/cm². This seems to be a result in which the particle properties of the carbon catalysts themselves were clearly reflected.

<Coating property evaluation> The fuel cell catalyst layers were evaluated by the below-shown coating property evaluation. The fuel cell catalyst layers formed on the Teflon (registered trademark) films were observed at 500 magnifications by using a Video Microscope VHX-900 (manufactured by Keyence Corporation), and their coating unevenness (unevenness: evaluated based on the color unevenness of the catalyst layers) and pinholes (evaluated based on the presence/absence of defects where no catalyst layer was formed) were determined according to the below-shown criteria.

### (Unevenness)

Circle: No color unevenness was observed (Excellent).
Triangle: There were a couple of unevenly colored parts but their sizes were extremely small (Practically acceptable).
Cross: There were a number of unevenly colored parts or there was at least one unevenly colored part whose streak length was 5 mm or longer (Defective).

### (Pinhole)

Circle: No pinhole was observed (Excellent).
Triangle: There were a couple of pinholes but their sizes were extremely small (Defective). Cross: There were a number of pinholes or there was at least one pinhole having a diameter of 1 mm or longer (Extremely defective).

<Manufacture of fuel cell anode catalyst layer> A method of manufacturing of a fuel cell anode catalyst layer, which is used for the manufacture of a fuel cell membrane electrode assembly, is explained hereinafter in detail. A catalyst paste composition (solid content concentration 4%) was manufactured by stirring and mixing 4 parts of a carbon with a platinum catalyst supported thereon (Manufactured by Tanaka Kikinzoku Kogyo K.K., platinum content 46%), which was used as a substitute for the carbon catalyst, 56 parts of 1-propanole, which was used as a solvent, and 20 parts of water by using a disper (T.K homodisper manufactured by Primix Corporation). Next, catalyst ink (solid content concentration 8%) was manufactured by adding 20 parts of a Nafion solution (manufactured by Du Pont: a water-alcohol mixed solution having a solid content of 20%) in the catalyst paste composition and stirring and mixing the mixture by using a disper (T.K homodisper manufactured by Primix Corporation). A fuel cell anode catalyst layer was manufactured by applying the obtained catalyst ink on a Teflon (registered trademark) film so that the coating weight of the carbon with a platinum catalyst supported thereon became 0.46 mg/cm², and drying the applied catalyst ink at 70°C for 15 minutes in an atmospheric atmosphere.

<Manufacture of fuel cell membrane electrode assembly> The obtained fuel cell cathode catalyst layer and the fuel cell anode catalyst layer were stuck on respective surfaces (i.e., both surfaces) of a solid polymer electrolyte (Nafion 212 manufactured by Du Pont, film-thickness 50 µm). After the stuck body was pressed from both sides under a condition of 150°C and 5 MPa, the Teflon (registered trademark) film was removed. Then, a fuel cell membrane electrode assembly (GDL/catalyst layer/solid polymer electrolyte/catalyst layer/GDL) according to the present invention was manufactured by further stacking electrode base materials (gaseous diffusion layers GDLs, carbon paper made of carbon fibers, TGP-H-090 manufactured by Toray Industries, Inc.) on both sides of the stuck body.

In the fuel cell membrane electrode assemblies (GDL/catalyst layer/solid polymer electrolyte/catalyst layer/GDL) manufactured in Examples according to the present invention, uniform electrode films were formed in which neither cracking nor broken parts were present in the catalyst layers after the transcription. In contrast to this, fuel cell membrane electrode assemblies manufactured in Comparative Examples were in a poor condition in which cracking and broken parts were present in the catalyst layers after the transcription.

<Manufacture of fuel cell (single cell)> The obtained fuel cell membrane electrode assemblies were formed into 2-cm cubic samples. Then, a fuel cell (single cell) was manufactured by stacking one gasket on each side of the sample, stacking one separator, which is a graphite plate, on each side thereof, and further stacking one collector plate on each side thereof. The measurement was carried out by using an AutoPEM series "PEFC Evaluation System" manufactured by Toyo Corporation. Power generation tests were carried out by feeding hydrogen to the anode side at a rate of 300 mL/min and feeding oxygen to the cathode side at a rate of 300 mL/min under a condition of a temperature of 80°C and a relative humidity of 100%, which was used as a fuel cell operating condition.

### <Evaluation of fuel cell (single cell)> Cell characteristics of the manufactured single cells were evaluated by measuring current-voltage characteristics thereof.

In the case where the fuel cell catalyst layer A was used, the open-circuit voltages of the single cells manufactured in the Examples were 0.7 to 0.8 V and the short-circuit current densities were 800 to 1,200 mA/cm². In contrast to this, the open-circuit voltages of the single cells manufactured in the Comparative Examples were 0.7 to 0.8 V and the short-circuit current densities were 600 to 800 mA/cm², which were lower than those of the Examples.

In the case where the fuel cell catalyst layer B was used, the open-circuit voltages of the single cells manufactured in the Examples were 0.8 to 0.9 V and the maximum output densities were 0.25 to 0.32 W/cm². In contrast to this, the open-circuit voltages of the single cells manufactured in the Comparative Examples were 0.7 to 0.8 V and the maximum output densities were 0.1 to 0.15 W/cm², which were lower than those of the Examples. These differences seem to result from the above-described fact that the cathode catalyst layers manufactured in the Examples were uniform coatings and their carbon catalysts had large coating weights. Further, fuel cells for which a disperser was added during the catalyst ink manufacturing process exhibited higher performances than those for which no disperser was added. This difference seems to result from the fact that the addition of a disperser enables the formation of more uniform coatings and effectively progresses the reactions between oxygen and protons and electrons in the films.

Table 1-3A shows results of evaluating catalyst layers A, and Table 1-3B shows results of evaluating catalyst layers B and fuel cells. [Table 1-3A]

| | Catalyst layer A | | |
|---|---|---|---|
| | Coating weight of carbon catalyst (mg/cm²) | Coating property evaluation (Unevenness) | Coating property evaluation (Pinholes) |
| Example 1-101 | 2 | ○ | ○ |
| Example 1-102 | 2 | ○ | ○ |
| Example 1-103 | 2 | ○ | ○ |
| Example 1-104 | 2 | ○ | ○ |
| Example 1-105 | 2 | ○ | ○ |
| Example 1-106 | 2 | ○ | ○ |
| Example 1-107 | 2 | ○ | ○ |
| Example 1-122 | 2 | ○ | ○ |
| Example 1-108 | 2 | ○ | ○ |
| Example 1-109 | 2 | ○ | ○ |
| Example 1-110 | 2 | ○ | ○ |
| Example 1-111 | 2 | ○ | ○ |
| Example 1-112 | 2 | ○ | ○ |
| Example 1-113 | 2 | ○ | ○ |
| Example 1-114 | 2 | ○ | ○ |
| Example 1-115 | 2 | ○ | ○ |
| Comparative Example 1-116 | 1 | Δ | × |
| Comparative Example 1-117 | 1 | Δ | × |
| Comparative Example 1-118 | 1 | Δ | × |
| Comparative Example 1-119 | 1 | Δ | × |
| Comparative Example 1-120 | 1 | Δ | × |
| Comparative Example 1-121 | 1 | Δ | × |

**[Table 1-3B]**

| | Catalyst layer B | | | Fuel cell | |
|---|---|---|---|---|---|
| | Coating weight of carbon catalyst (mg/cm²) | Coating property evaluation (Unevenness) | Coating property evaluation (Pinholes) | Open-circuit voltage V | Maximum output density W/cm² |
| Example 1-101 | 3 | ○ | ○ | 0.8 | 0.26 |
| Example 1-102 | 3 | ○ | ○ | 0.81 | 0.28 |
| Example 1-103 | 3 | ○ | ○ | 0.85 | 0.3 |
| Example 1-104 | 3 | ○ | ○ | 0.92 | 0.31 |
| Example 1-105 | 3 | ○ | ○ | 0.88 | 0.3 |
| Example 1-106 | 3 | ○ | ○ | 0.81 | 0.27 |
| Example 1-122 | 3 | ○ | ○ | 0.8 | 0.27 |
| Example 1-107 | 3 | ○ | ○ | 0.88 | 0.29 |
| Example 1-108 | 3 | ○ | ○ | 0.8 | 0.26 |
| Example 1-109 | 3 | ○ | ○ | 0.86 | 0.25 |
| Example 1-110 | 3 | ○ | ○ | 0.81 | 0.29 |
| Example 1-111 | 3 | ○ | ○ | 0.84 | 0.27 |
| Example 1-112 | 3 | ○ | ○ | 0.82 | 0.27 |
| Example 1-113 | 3 | ○ | ○ | 0.93 | 0.32 |
| Example 1-114 | 3 | ○ | ○ | 0.94 | 0.33 |
| Example 1-115 | 3 | ○ | ○ | 0.93 | 0.31 |
| Comparative Example 1-116 | 1 | Δ | × | 0.69 | 0.1 |
| Comparative Example 1-117 | 1 | Δ | × | 0.73 | 0.13 |
| Comparative Example 1-118 | 1 | Δ | × | 0.77 | 0.14 |
| Comparative Example 1-119 | 1 | Δ | × | 0.77 | 0.15 |
| Comparative Example 1-120 | 1 | Δ | × | 0.75 | 0.13 |
| Comparative Example 1-121 | 1 | Δ | × | 0.71 | 0.11 |

### <Durability evaluation>

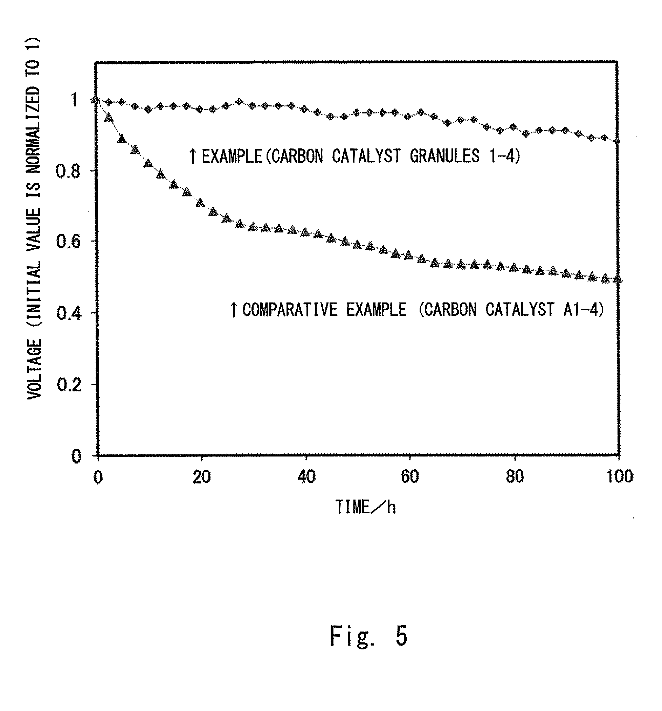

Durability tests were carried out for manufactured catalysts. Evaluations of voltages over time were carried out in an operating condition of a temperature of 80°C and a relative humidity of 100% in which: hydrogen was fed to the anode side at a rate of 300 mL/min; oxygen was fed to the cathode side at a rate of 300 mL/min; and the current was kept at 0.1 A/cm². For the evaluations, the carbon catalyst granules 1-4 were used as an Example and the carbon catalyst A-4 was used as a Comparative Example. Fig. 5 shows their results. As can be seen from Fig. 5, the single cell manufactured in the Example has better durability than that of the single cell manufactured in the Comparative Example. It is considered that this difference results from the fact that when hydrogen peroxide is generated as an intermediate during the reaction, though the generated hydrogen peroxide deteriorates the activity sites and the electrolyte membranes, the activity site density rises owing to the granulation. Therefore, even when hydrogen peroxide is generated, reductions to water progress immediately and the concentration of the hydrogen peroxide in the catalyst layer can be kept at a low level. As a result, the single cell manufactured in the Example exhibited higher durability.

### <Manufacture of second carbon catalyst granule>

[Iron phthalocyanine dispersion body (1)] A uniform aqueous solution was manufactured by weighing 83 parts of ion-exchange water and 10 parts of a resin-type disperser Joncryl JDX-6500 (manufactured by BASF Japan Ltd.: an aqueous solution having a solid content of 30%) and putting them in a glass bottle. After that, 7 parts of iron phthalocyanine (manufactured by Sanyo Color Works, Ltd.) were added and zirconia beads were also added as a medium. Then, an iron phthalocyanine dispersion body (1) (solid content 10%) was obtained by dispersing the contents by a paint shaker.

[Iron phthalocyanine dispersion body (2)] A uniform aqueous solution was manufactured by weighing 90 parts of ion-exchange water and 3 parts of a resin-type disperser Polyvinyl Pyrrolidone PVP K-30 (manufactured by ISP Japan) and putting them in a glass bottle. After that, 7 parts of iron phthalocyanine (manufactured by Sanyo Color Works, Ltd.) were added and zirconia beads were also added as a medium. Then, an iron phthalocyanine dispersion body (2) (solid content 10%) was obtained by dispersing the contents by a paint shaker.

[Cobalt phthalocyanine dispersion body] A uniform aqueous solution was manufactured by weighing 83 parts of ion-exchange water and 10 parts of a resin-type disperser Joncryl JDX-6500 (manufactured by BASF Japan Ltd.: an aqueous solution having a solid content of 30%) and putting them in a glass bottle. After that, 7 parts of cobalt phthalocyanine (manufactured by Tokyo Chemical Industry Co., Ltd.) were added and zirconia beads were also added as a medium. Then, a cobalt phthalocyanine dispersion body (solid content 10%) was obtained by dispersing the contents by a paint shaker.

[Ketjen black dispersion body (1)] A uniform aqueous solution was manufactured by weighing 83 parts of ion-exchange water and 10 parts of a resin-type disperser Joncryl JDX-6500 (manufactured by BASF Japan Ltd.: an aqueous solution having a solid content of 30%) and putting them in a glass bottle. After that, 7 parts of Ketjen black (EC-300J manufactured by Lion Corporation) were added and zirconia beads were also added as a medium. Then, a Ketjen black dispersion body (1) (solid content 10%) was obtained by dispersing the contents by a paint shaker.

[Ketjen black dispersion body (2)] A uniform aqueous solution was manufactured by weighing 91.5 parts of ion-exchange water and 5 parts of a resin-type disperser Joncryl JDX-6500 (manufactured by BASF Japan Ltd.: an aqueous solution having a solid content of 30%) and putting them in a glass bottle. After that, 3.5 parts of Ketjen black (EC-600JD manufactured by Lion Corporation) were added and zirconia beads were also added as a medium. Then, a Ketjen black dispersion body (2) (solid content 5%) was obtained by dispersing the contents by a paint shaker.

[Ketjen black dispersion body (3)] A uniform aqueous solution was manufactured by weighing 84.2 parts of ion-exchange water and 8.8 parts of a resin-type disperser Joncryl HPD-96J (manufactured by BASF Japan Ltd.: an aqueous solution having a solid content of 34%) and putting them in a glass bottle. After that, 7 parts of Ketjen black (EC-300J manufactured by Lion Corporation) were added and zirconia beads were also added as a medium. Then, a Ketjen black dispersion body (3) (solid content 10%) was obtained by dispersing the contents by a paint shaker.

[Ketjen black dispersion body (4)] A uniform aqueous solution was manufactured by weighing 45 parts of ion-exchange water and 50 parts of an iron phthalocyanine derivative FePc-(SO3NH4)4 (manufactured by Nittetsu Mining Co., Ltd.: an aqueous solution having a solid content of 10%) and putting them in a glass bottle. After that, 5 parts of Ketjen black (EC-300J manufactured by Lion Corporation) were added and zirconia beads were also added as a medium. Then, a Ketjen black dispersion body (4) (solid content 10%) was obtained by dispersing the contents by a paint shaker.

[Ketjen black dispersion body (5)] A uniform aqueous solution was manufactured by weighing 45 parts of ion-exchange water and 50 parts of an iron phthalocyanine derivative FePc-(SO3NH4)4 (manufactured by Nittetsu Mining Co., Ltd.: an aqueous solution having a solid content of 10%) and putting them in a glass bottle. After that, 5 parts of Ketjen black (EC-600JD manufactured by Lion Corporation) were added and zirconia beads were also added as a medium. Then, a Ketjen black dispersion body (5) (solid content 10%) was obtained by dispersing the contents by a paint shaker.

[Ketjen black dispersion body (6)] A uniform aqueous solution was manufactured by weighing 95 parts of ion-exchange water and 1.5 parts of a resin-type disperser Polyvinyl Pyrrolidone PVP K-30 (manufactured by ISP Japan) and putting them in a glass bottle. After that, 3.5 parts of Ketjen black (EC-600JD manufactured by Lion Corporation) were added and zirconia beads were also added as a medium. Then, a Ketjen black dispersion body (6) (solid content 5%) was obtained by dispersing the contents by a paint shaker.

[Graphene nano-platelet dispersion body (1)] A uniform aqueous solution was manufactured by weighing 83 parts of ion-exchange water and 10 parts of a resin-type disperser Joncryl JDX-6500 (manufactured by BASF Japan Ltd.: an aqueous solution having a solid content of 30%) and putting them in a glass bottle. After that, 7 parts of graphene nano-platelets (xGnP-C-750 manufactured by XGSciences) were added and zirconia beads were also added as a medium. Then, a graphene nano-platelet dispersion body (1) (solid content 10%) was obtained by dispersing the contents by a paint shaker.

[Graphene nano-platelet dispersion body (2)] A uniform aqueous solution was manufactured by weighing 90 parts of ion-exchange water and 3 parts of a resin-type disperser Polyvinyl Pyrrolidone PVP K-30 (manufactured by ISP Japan) and putting them in a glass bottle. After that, 7 parts of graphene nano-platelets (xGnP-C-750 manufactured by XGSciences) were added and zirconia beads were also added as a medium. Then, a graphene nano-platelet dispersion body (2) (solid content 10%) was obtained by dispersing the contents by a paint shaker.

[Carbon nano-tube dispersion body] A uniform aqueous solution was manufactured by weighing 83 parts of ion-exchange water and 10 parts of a resin-type disperser Joncryl JDX-6500 (manufactured by BASF Japan Ltd.: an aqueous solution having a solid content of 30%) and putting them in a glass bottle. After that, 7 parts of carbon nano-tubes (VGCF-H from Showa Denko K.K.) were added and zirconia beads were also added as a medium. Then, a carbon nano-tube dispersion body (solid content 10%) was obtained by dispersing the contents by a paint shaker.

[Example 2-1: Carbon catalyst granule (2-1)] A mixture paste was manufactured by weighing and mixing the above-described iron phthalocyanine dispersion body (1) and the Ketjen black dispersion body (1) at a mass ratio of 1:1. Precursor granules having an average particle diameter of about 10 µm were obtained by spraying and drying this mixture paste under a 125°C atmosphere by using a mini-spray dryer ("B-290" manufactured by Nihon-Buchi K.K.). Carbon catalyst granules (2-1) were obtained by putting the aforementioned precursor granules in a crucible made of alumina and performing a carbonizing process for the precursor granules at 700°C for two hours under a nitrogen atmosphere by an electric furnace. The carbon catalyst granules (2-1) were spherical particles having an average particle diameter of 10 µm, and had a BET specific surface of 160 m²/g and a tap density of 0.25 g/cm³. Further, it was confirmed that the carbon catalyst granules include a nitrogen element and an iron element.

[Example 2-2: Carbon catalyst granule (2-2)] The carbon catalyst granules (2-2) obtained in Example 2-1 were brought into a slurry state in a concentrated hydrochloric acid again and the dissolved iron-derived components were thereby eluted. Then, after the slurry was left at a standstill so that the carbon catalyst granules were precipitated, the supernatant liquid was removed. The above-described process was repeated until the color of the supernatant liquid disappeared. Then, carbon catalyst granules (2-2) were obtained by filtering, water-washing, and drying the resultant substance. The carbon catalyst granules (2-2) were spherical particles having an average particle diameter of 10 µm, and had a BET specific surface of 130 m²/g and a tap density of 0.27 g/cm³. Further, it was confirmed that the carbon catalyst granules include a nitrogen element and an iron element.

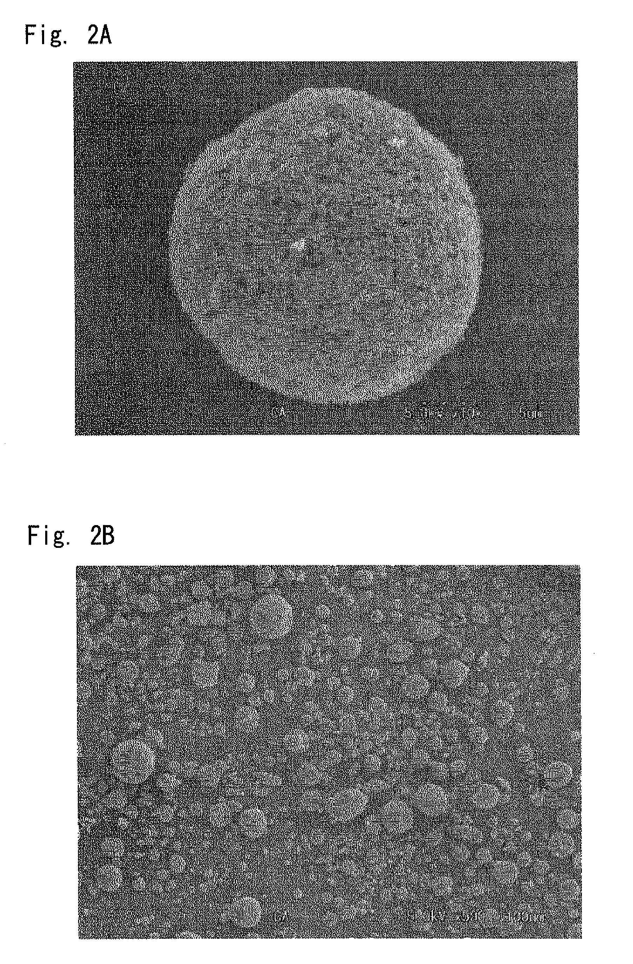

[Example 2-3: Carbon catalyst granule (2-3)] Carbon catalyst granules (2-3) were obtained by putting the carbon catalyst granules (2-2) obtained in Example 2-2 in a crucible made of alumina and heat-treating the carbon catalyst granules at 700°C for one hour under a nitrogen atmosphere by an electric furnace. The carbon catalyst granules (2-3) were spherical particles having an average particle diameter of 10 µm, and had a BET specific surface of 165 m²/g and a tap density of 0.25 g/cm³. Fig. 2 shows SEM photographs of the obtained carbon catalyst granules. Further, it was confirmed that the carbon catalyst granules include a nitrogen element and an iron element.

[Example 2-4: Carbon catalyst granule (2-4)] A mixture paste was manufactured by weighing and mixing the above-described iron phthalocyanine dispersion body (1) and the Ketjen black dispersion body (1) at a mass ratio of 1:1. Precursor granules having an average particle diameter of about 10 µm were obtained by spraying and drying this mixture paste under a 125°C atmosphere by using a mini-spray dryer ("B-290" manufactured by Nihon-Buchi K.K.). Carbon catalyst granules (2-4) were obtained by putting the aforementioned precursor granules in a crucible made of alumina and performing a carbonizing process for the precursor granules at 800°C for two hours under a nitrogen atmosphere by an electric furnace. The carbon catalyst granules (2-4) were spherical particles having an average particle diameter of 10 µm, and had a BET specific surface of 180 m²/g and a tap density of 0.27 g/cm³. Further, it was confirmed that the carbon catalyst granules include a nitrogen element and an iron element.

[Example 2-5: Carbon catalyst granule (2-5)] The carbon catalyst granules (2-4) obtained in Example 2-4 were brought into a slurry state in a concentrated hydrochloric acid again and the dissolved iron-derived components were thereby eluted. Then, after the slurry was left at a standstill so that the carbon catalyst granules were precipitated, the supernatant liquid was removed. The above-described process was repeated until the color of the supernatant liquid disappeared. Then, carbon catalyst granules (2-5) were obtained by filtering, water-washing, and drying the resultant substance. The carbon catalyst granules (2-5) were spherical particles having an average particle diameter of 10 µm, and had a BET specific surface of 160 m²/g and a tap density of 0.26 g/cm³. Further, it was confirmed that the carbon catalyst granules include a nitrogen element and an iron element.

[Example 2-6: Carbon catalyst granule (2-6)] Carbon catalyst granules (2-6) were obtained by putting the carbon catalyst granules (2-5) obtained in Example 2-5 in a crucible made of alumina and heat-treating the carbon catalyst granules at 800°C for one hour under a nitrogen atmosphere by an electric furnace. The carbon catalyst granules (2-6) were spherical particles having an average particle diameter of 10 µm, and had a BET specific surface of 185 m²/g and a tap density of 0.27 g/cm³. Further, it was confirmed that the carbon catalyst granules include a nitrogen element and an iron element.

[Example 2-7: Carbon catalyst granule (2-7)] A mixture paste was manufactured by weighing and mixing the above-described iron phthalocyanine dispersion body (1) and the Ketjen black dispersion body (2) at a mass ratio of 1:1. Precursor granules having an average particle diameter of about 10 µm were obtained by spraying and drying this mixture paste under a 125°C atmosphere by using a mini-spray dryer ("B-290" manufactured by Nihon-Buchi K.K.). Carbon catalyst granules (2-7) were obtained by putting the aforementioned precursor granules in a crucible made of alumina and performing a carbonizing process for the precursor granules at 800°C for two hours under a nitrogen atmosphere by an electric furnace. The carbon catalyst granules (2-7) were spherical particles having an average particle diameter of 10 µm, and had a BET specific surface of 280 m²/g and a tap density of 0.29 g/cm³. Further, it was confirmed that the carbon catalyst granules include a nitrogen element and an iron element.

[Example 2-8: Carbon catalyst granule (2-8)] The carbon catalyst granules (2-7) obtained in Example 2-7 were brought into a slurry state in a concentrated hydrochloric acid again and the dissolved iron-derived components were thereby eluted. Then, after the slurry was left at a standstill so that the carbon catalyst granules were precipitated, the supernatant liquid was removed. The above-described process was repeated until the color of the supernatant liquid disappeared. Then, carbon catalyst granules (2-8) were obtained by filtering, water-washing, and drying the resultant substance. The carbon catalyst granules (2-8) were spherical particles having an average particle diameter of 10 µm, and had a BET specific surface of 250 m²/g and a tap density of 0.27 g/cm³. Further, it was confirmed that the carbon catalyst granules include a nitrogen element and an iron element.

[Example 2-9: Carbon catalyst granule (2-9)] Carbon catalyst granules (2-9) were obtained by putting the carbon catalyst granules (2-8) obtained in Example 2-8 in a crucible made of alumina and heat-treating the carbon catalyst granules at 800°C for one hour under a nitrogen atmosphere by an electric furnace. The carbon catalyst granules (2-9) were spherical particles having an average particle diameter of 10 µm, and had a BET specific surface of 310 m²/g and a tap density of 0.28 g/cm³. Further, it was confirmed that the carbon catalyst granules include a nitrogen element and an iron element.

[Example 2-10: Carbon catalyst granule (2-10)] A mixture paste was manufactured by weighing and mixing the above-described iron phthalocyanine dispersion body (1) and the graphene nano-platelet dispersion body (1) at a mass ratio of 1:1. Precursor granules having an average particle diameter of about 10 µm were obtained by spraying and drying this mixture paste under a 125°C atmosphere by using a mini-spray dryer ("B-290" manufactured by Nihon-Buchi K.K.). Carbon catalyst granules (2-10) were obtained by putting the aforementioned precursor granules in a crucible made of alumina and performing a carbonizing process for the precursor granules at 700°C for two hours under a nitrogen atmosphere by an electric furnace. The carbon catalyst granules (2-10) were spherical particles having an average particle diameter of 8 µm, and had a BET specific surface of 240 m²/g and a tap density of 0.3 g/cm³. Further, it was confirmed that the carbon catalyst granules include a nitrogen element and an iron element.

[Example 2-11: Carbon catalyst granule (2-11)] The carbon catalyst granules (2-10) obtained in Example 2-10 were brought into a slurry state in a concentrated hydrochloric acid again and the dissolved iron-derived components were thereby eluted. Then, after the slurry was left at a standstill so that the carbon catalyst granules were precipitated, the supernatant liquid was removed. The above-described process was repeated until the color of the supernatant liquid disappeared. Then, carbon catalyst granules (2-11) were obtained by filtering, water-washing, and drying the resultant substance. The carbon catalyst granules (2-11) were spherical particles having an average particle diameter of 8 µm, and had a BET specific surface of 200 m²/g and a tap density of 0.31 g/cm³. Further, it was confirmed that the carbon catalyst granules include a nitrogen element and an iron element.

[Example 2-12: Carbon catalyst granule (2-12)] Carbon catalyst granules (2-12) were obtained by putting the carbon catalyst granules (2-11) obtained in Example 2-11 in a crucible made of alumina heat-treating the carbon catalyst granules at 700°C for one hour under a nitrogen atmosphere by an electric furnace. The carbon catalyst granules (2-12) were spherical particles having an average particle diameter of 8 µm, and had a BET specific surface of 280 m²/g and a tap density of 0.3 g/cm³. Further, it was confirmed that the carbon catalyst granules include a nitrogen element and an iron element.

[Example 2-13: Carbon catalyst granule (2-13)] A mixture paste was manufactured by weighing and mixing the above-described iron phthalocyanine dispersion body (1) and the graphene nano-platelet dispersion body (1) at a mass ratio of 1:1. Precursor granules having an average particle diameter of about 10 µm were obtained by spraying and drying this mixture paste under a 125°C atmosphere by using a mini-spray dryer ("B-290" manufactured by Nihon-Buchi K.K.). Carbon catalyst granules (2-13) were obtained by putting the aforementioned precursor granules in a crucible made of alumina and performing a carbonizing process for the precursor granules at 800°C for two hours under a nitrogen atmosphere by an electric furnace. The carbon catalyst granules (2-13) were spherical particles having an average particle diameter of 8 µm, and had a BET specific surface of 250 m²/g and a tap density of 0.29 g/cm³. Further, it was confirmed that the carbon catalyst granules include a nitrogen element and an iron element.

[Example 2-14: Carbon catalyst granule (2-14)] The carbon catalyst granules (2-13) obtained in Example 2-13 were brought into a slurry state in a concentrated hydrochloric acid again and the dissolved iron-derived components were thereby eluted. Then, after the slurry was left at a standstill so that the carbon catalyst granules were precipitated, the supernatant liquid was removed. The above-described process was repeated until the color of the supernatant liquid disappeared. Then, carbon catalyst granules (2-14) were obtained by filtering, water-washing, and drying the resultant substance. The carbon catalyst granules (2-14) were spherical particles having an average particle diameter of 8 µm, and had a BET specific surface of 230 m²/g and a tap density of 0.28 g/cm³. Further, it was confirmed that the carbon catalyst granules include a nitrogen element and an iron element.

[Example 2-15: Carbon catalyst granule (2-15)] Carbon catalyst granules (2-15) were obtained by putting the carbon catalyst granules (2-14) obtained in Example 2-14 in a crucible made of alumina and heat-treating the carbon catalyst granules at 800°C for one hour under a nitrogen atmosphere by an electric furnace. The carbon catalyst granules (2-15) were spherical particles having an average particle diameter of 8 µm, and had a BET specific surface of 290 m²/g and a tap density of 0.30 g/cm³. Further, it was confirmed that the carbon catalyst granules include a nitrogen element and an iron element.

[Example 2-16: Carbon catalyst granule (2-16)] A mixture paste was manufactured by weighing and mixing the above-described iron phthalocyanine dispersion body (1), the Ketjen black dispersion body (1), and the graphene nano-platelet dispersion body (1) at a mass ratio of 1:0.5:0.5. Precursor granules having an average particle diameter of about 10 µm were obtained by spraying and drying this mixture paste under a 125°C atmosphere by using a mini-spray dryer ("B-290" manufactured by Nihon-Buchi K.K.). Carbon catalyst granules (2-16) were obtained by putting the aforementioned precursor granules in a crucible made of alumina and performing a carbonizing process for the precursor granules at 700°C for two hours under a nitrogen atmosphere by an electric furnace. The carbon catalyst granules (2-16) were spherical particles having an average particle diameter of 10 µm, and had a BET specific surface of 190 m²/g and a tap density of 0.28 g/cm³. Further, it was confirmed that the carbon catalyst granules include a nitrogen element and an iron element.

[Example 2-17: Carbon catalyst granule (2-17)] The carbon catalyst granules (2-16) obtained in Example 2-16 were brought into a slurry state in a concentrated hydrochloric acid again and the dissolved iron-derived components were thereby eluted. Then, after the slurry was left at a standstill so that the carbon catalyst granules were precipitated, the supernatant liquid was removed. The above-described process was repeated until the color of the supernatant liquid disappeared. Then, carbon catalyst granules (2-17) were obtained by filtering, water-washing, and drying the resultant substance. The carbon catalyst granules (2-17) were spherical particles having an average particle diameter of 10 µm, and had a BET specific surface of 140 m²/g and a tap density of 0.30 g/cm³. Further, it was confirmed that the carbon catalyst granules include a nitrogen element and an iron element.

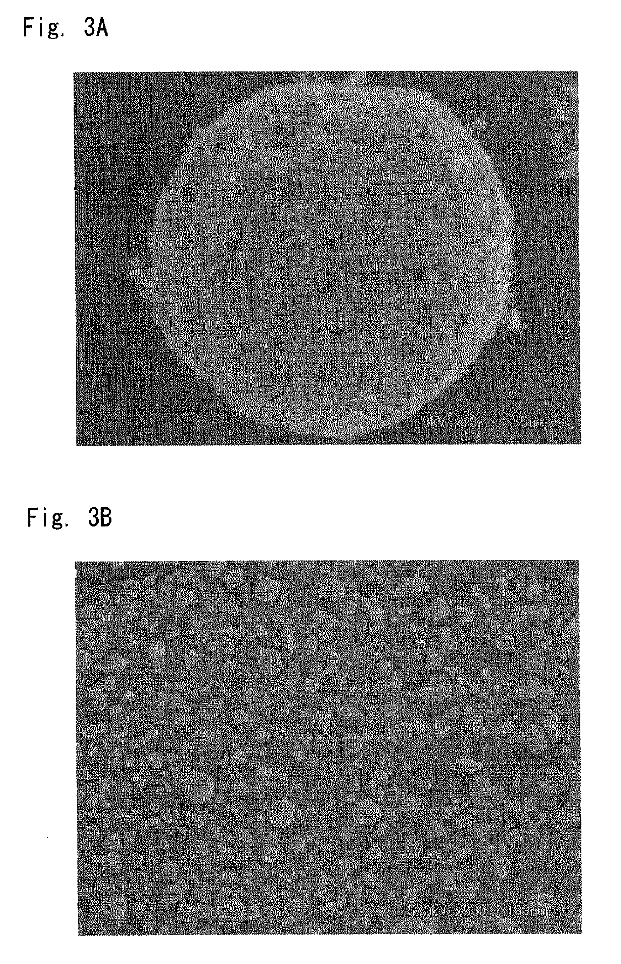

[Example 2-18: Carbon catalyst granule (2-18)] Carbon catalyst granules (2-18) were obtained by putting the carbon catalyst granules (2-17) obtained in Example 2-17 in a crucible made of alumina heat-treating the carbon catalyst granules at 700°C for one hour under a nitrogen atmosphere by an electric furnace. The carbon catalyst granules (2-18) were spherical particles having an average particle diameter of 10 µm, and had a BET specific surface of 230 m²/g and a tap density of 0.29 g/cm³. Fig. 3 shows SEM photographs of the obtained carbon catalyst granules. Further, it was confirmed that the carbon catalyst granules include a nitrogen element and an iron element.

[Example 2-19: Carbon catalyst granule (2-19)] A mixture paste was manufactured by weighing and mixing the above-described iron phthalocyanine dispersion body (1), the Ketjen black dispersion body (1), and the graphene nano-platelet dispersion body (1) at a mass ratio of 1:0.5:0.5. Precursor granules having an average particle diameter of about 10 µm were obtained by spraying and drying this mixture paste under a 125°C atmosphere by using a mini-spray dryer ("B-290" manufactured by Nihon-Buchi K.K.). Carbon catalyst granules (2-19) were obtained by putting the aforementioned precursor granules in a crucible made of alumina and performing a carbonizing process for the precursor granules at 800°C for two hours under a nitrogen atmosphere by an electric furnace. The carbon catalyst granules (2-19) were spherical particles having an average particle diameter of 10 µm, and had a BET specific surface of 200 m²/g and a tap density of 0.30 g/cm³. Further, it was confirmed that the carbon catalyst granules include a nitrogen element and an iron element.

[Example 2-20: Carbon catalyst granule (2-20)] The carbon catalyst granules (2-19) obtained in Example 2-19 were brought into a slurry state in a concentrated hydrochloric acid again and the dissolved iron-derived components were thereby eluted. Then, after the slurry was left at a standstill so that the carbon catalyst granules were precipitated, the supernatant liquid was removed. The above-described process was repeated until the color of the supernatant liquid disappeared. Then, carbon catalyst granules (2-20) were obtained by filtering, water-washing, and drying the resultant substance. The carbon catalyst granules (2-20) were spherical particles having an average particle diameter of 10 µm, and had a BET specific surface of 185 m²/g and a tap density of 0.27 g/cm³. Further, it was confirmed that the carbon catalyst granules include a nitrogen element and an iron element.

[Example 2-21: Carbon catalyst granule (2-21)] Carbon catalyst granules (2-21) were obtained by putting the carbon catalyst granules (2-20) obtained in Example 2-20 in a crucible made of alumina and heat-treating the carbon catalyst granules at 800°C for one hour under a nitrogen atmosphere by an electric furnace. The carbon catalyst granules (2-21) were spherical particles having an average particle diameter of 10 µm, and had a BET specific surface of 200 m²/g and a tap density of 0.30 g/cm³. Further, it was confirmed that the carbon catalyst granules include a nitrogen element and an iron element.

[Example 2-22: Carbon catalyst granule (2-22)] A mixture paste was manufactured by weighing and mixing the above-described iron phthalocyanine dispersion body (1), the Ketjen black dispersion body (2), and the graphene nano-platelet dispersion body (1) at a mass ratio of 1:0.5:0.5. Precursor granules having an average particle diameter of about 10 µm were obtained by spraying and drying this mixture paste under a 125°C atmosphere by using a mini-spray dryer ("B-290" manufactured by Nihon-Buchi K.K.). Carbon catalyst granules (2-22) were obtained by putting the aforementioned precursor granules in a crucible made of alumina and performing a carbonizing process for the precursor granules at 800°C for two hours under a nitrogen atmosphere by an electric furnace. The carbon catalyst granules (2-22) were spherical particles having an average particle diameter of 10 µm, and had a BET specific surface of 250 m²/g and a tap density of 0.29 g/cm³. Further, it was confirmed that the carbon catalyst granules include a nitrogen element and an iron element.

[Example 2-23: Carbon catalyst granule (2-23)] The carbon catalyst granules (2-22) obtained in Example 2-22 were brought into a slurry state in a concentrated hydrochloric acid again and the dissolved iron-derived components were thereby eluted. Then, after the slurry was left at a standstill so that the carbon catalyst granules were precipitated, the supernatant liquid was removed. The above-described process was repeated until the color of the supernatant liquid disappeared. Then, carbon catalyst granules (2-23) were obtained by filtering, water-washing, and drying the resultant substance. The carbon catalyst granules (2-23) were spherical particles having an average particle diameter of 10 µm, and had a BET specific surface of 220 m²/g and a tap density of 0.30 g/cm³. Further, it was confirmed that the carbon catalyst granules include a nitrogen element and an iron element.

[Example 2-24: Carbon catalyst granule (2-24)] Carbon catalyst granules (2-24) were obtained by putting the carbon catalyst granules (2-23) obtained in Example 2-23 in a crucible made of alumina and heat-treating the carbon catalyst granules at 800°C for one hour under a nitrogen atmosphere by an electric furnace. The carbon catalyst granules (2-24) were spherical particles having an average particle diameter of 10 µm, and had a BET specific surface of 260 m²/g and a tap density of 0.31 g/cm³. Further, it was confirmed that the carbon catalyst granules include a nitrogen element and an iron element.

[Example 2-25: Carbon catalyst granule (2-25)] A mixture paste was manufactured by weighing and mixing the above-described iron phthalocyanine dispersion body (1), the Ketjen black dispersion body (2), and the graphene nano-platelet dispersion body (1) at a mass ratio of 1:0.25:0.25. Precursor granules having an average particle diameter of about 10 µm were obtained by spraying and drying this mixture paste under a 125°C atmosphere by using a mini-spray dryer ("B-290" manufactured by Nihon-Buchi K.K.). Carbon catalyst granules (2-25) were obtained by putting the aforementioned precursor granules in a crucible made of alumina and performing a carbonizing process for the precursor granules at 800°C for two hours under a nitrogen atmosphere by an electric furnace. The carbon catalyst granules (2-25) were spherical particles having an average particle diameter of 10 µm, and had a BET specific surface of 280 m²/g and a tap density of 0.27 g/cm³. Further, it was confirmed that the carbon catalyst granules include a nitrogen element and an iron element.

[Example 2-26: Carbon catalyst granule (2-26)] The carbon catalyst granules (2-25) obtained in Example 2-25 were brought into a slurry state in a concentrated hydrochloric acid again and the dissolved iron-derived components were thereby eluted. Then, after the slurry was left at a standstill so that the carbon catalyst granules were precipitated, the supernatant liquid was removed. The above-described process was repeated until the color of the supernatant liquid disappeared. Then, carbon catalyst granules (2-26) were obtained by filtering, water-washing, and drying the resultant substance. The carbon catalyst granules (2-26) were spherical particles having an average particle diameter of 10 µm, and had a BET specific surface of 270 m²/g and a tap density of 0.28 g/cm³. Further, it was confirmed that the carbon catalyst granules include a nitrogen element and an iron element.

[Example 2-27: Carbon catalyst granule (2-27)] Carbon catalyst granules (2-27) were obtained by putting the carbon catalyst granules (2-26) obtained in Example 2-26 in a crucible made of alumina and heat-treating the carbon catalyst granules at 800°C for one hour under a nitrogen atmosphere by an electric furnace. The carbon catalyst granules (2-27) were spherical particles having an average particle diameter of 10 µm, and had a BET specific surface of 295 m²/g and a tap density of 0.30 g/cm³. Further, it was confirmed that the carbon catalyst granules include a nitrogen element and an iron element.

[Example 2-28: Carbon catalyst granule (2-28)] A mixture paste was manufactured by weighing and mixing the above-described iron phthalocyanine dispersion body (1), the Ketjen black dispersion body (2), and the graphene nano-platelet dispersion body (1) at a mass ratio of 1:0.75:0.25. Precursor granules having an average particle diameter of about 10 µm were obtained by spraying and drying this mixture paste under a 125°C atmosphere by using a mini-spray dryer ("B-290" manufactured by Nihon-Buchi K.K.). Carbon catalyst granules (2-28) were obtained by putting the aforementioned precursor granules in a crucible made of alumina and performing a carbonizing process for the precursor granules at 800°C for two hours under a nitrogen atmosphere by an electric furnace. The carbon catalyst granules (2-28) were spherical particles having an average particle diameter of 10 µm, and had a BET specific surface of 410 m²/g and a tap density of 0.33 g/cm³. Further, it was confirmed that the carbon catalyst granules include a nitrogen element and an iron element.

[Example 2-29: Carbon catalyst granule (2-29)] The carbon catalyst granules (2-28) obtained in Example 2-28 were brought into a slurry state in a concentrated hydrochloric acid again and the dissolved iron-derived components were thereby eluted. Then, after the slurry was left at a standstill so that the carbon catalyst granules were precipitated, the supernatant liquid was removed. The above-described process was repeated until the color of the supernatant liquid disappeared. Then, carbon catalyst granules (2-29) were obtained by filtering, water-washing, and drying the resultant substance. The carbon catalyst granules (2-29) were spherical particles having an average particle diameter of 10 µm, and had a BET specific surface of 400 m²/g and a tap density of 0.32 g/cm³. Further, it was confirmed that the carbon catalyst granules include a nitrogen element and an iron element.

[Example 2-30: Carbon catalyst granule (2-30)] Carbon catalyst granules (2-30) were obtained by putting the carbon catalyst granules (2-29) obtained in Example 2-29 in a crucible made of alumina and heat-treating the carbon catalyst granules at 800°C for one hour under a nitrogen atmosphere by an electric furnace. The carbon catalyst granules (2-30) were spherical particles having an average particle diameter of 10 µm, and had a BET specific surface of 430 m²/g and a tap density of 0.33 g/cm³. Further, it was confirmed that the carbon catalyst granules include a nitrogen element and an iron element.

[Example 2-31: Carbon catalyst granule (2-31)] A mixture paste was manufactured by weighing and mixing the above-described iron phthalocyanine dispersion body (1), the Ketjen black dispersion body (1), and the carbon nano-tube dispersion body at a mass ratio of 1:0.8:0.2. Precursor granules having an average particle diameter of about 12 µm were obtained by spraying and drying this mixture paste under a 125°C atmosphere by using a mini-spray dryer ("B-290" manufactured by Nihon-Buchi K.K.). Carbon catalyst granules (2-31) were obtained by putting the aforementioned precursor granules in a crucible made of alumina and performing a carbonizing process for the precursor granules at 700°C for two hours under a nitrogen atmosphere by an electric furnace. The carbon catalyst granules (2-31) were spherical particles having an average particle diameter of 12 µm, and had a BET specific surface of 350 m²/g and a tap density of 0.24 g/cm³. Further, it was confirmed that the carbon catalyst granules include a nitrogen element and an iron element.

[Example 2-32: Carbon catalyst granule (2-32)] The carbon catalyst granules (2-31) obtained in Example 2-31 were brought into a slurry state in a concentrated hydrochloric acid again and the dissolved iron-derived components were thereby eluted. Then, after the slurry was left at a standstill so that the carbon catalyst granules were precipitated, the supernatant liquid was removed. The above-described process was repeated until the color of the supernatant liquid disappeared. Then, carbon catalyst granules (2-32) were obtained by filtering, water-washing, and drying the resultant substance. The carbon catalyst granules (2-32) were spherical particles having an average particle diameter of 12 µm, and had a BET specific surface of 290 m²/g and a tap density of 0.26 g/cm³. Further, it was confirmed that the carbon catalyst granules include a nitrogen element and an iron element.

[Example 2-33: Carbon catalyst granule (2-33)] Carbon catalyst granules (2-33) were obtained by putting the carbon catalyst granules (2-32) obtained in Example 2-32 in a crucible made of alumina heat-treating the carbon catalyst granules at 700°C for one hour under a nitrogen atmosphere by an electric furnace. The carbon catalyst granules (2-33) were spherical particles having an average particle diameter of 12 µm, and had a BET specific surface of 340 m²/g and a tap density of 0.24 g/cm³. Further, it was confirmed that the carbon catalyst granules include a nitrogen element and an iron element.

[Example 2-34: Carbon catalyst granule (2-34)] A mixture paste was manufactured by weighing and mixing the above-described iron phthalocyanine dispersion body (1), the Ketjen black dispersion body (1), and the carbon nano-tube dispersion body at a mass ratio of 1:0.8:0.2. Precursor granules having an average particle diameter of about 12 µm were obtained by spraying and drying this mixture paste under a 125°C atmosphere by using a mini-spray dryer ("B-290" manufactured by Nihon-Buchi K.K.). Carbon catalyst granules (2-34) were obtained by putting the aforementioned precursor granules in a crucible made of alumina and performing a carbonizing process for the precursor granules at 800°C for two hours under a nitrogen atmosphere by an electric furnace. The carbon catalyst granules (2-34) were spherical particles having an average particle diameter of 12 µm, and had a BET specific surface of 360 m²/g and a tap density of 0.25 g/cm³. Further, it was confirmed that the carbon catalyst granules include a nitrogen element and an iron element.

[Example 2-35: Carbon catalyst granule (2-35)] The carbon catalyst granules (2-34) obtained in Example 2-34 were brought into a slurry state in a concentrated hydrochloric acid again and the dissolved iron-derived components were thereby eluted. Then, after the slurry was left at a standstill so that the carbon catalyst granules were precipitated, the supernatant liquid was removed. The above-described process was repeated until the color of the supernatant liquid disappeared. Then, carbon catalyst granules (2-35) were obtained by filtering, water-washing, and drying the resultant substance. The carbon catalyst granules (2-35) were spherical particles having an average particle diameter of 12 µm, and had a BET specific surface of 290 m²/g and a tap density of 0.26 g/cm³. Further, it was confirmed that the carbon catalyst granules include a nitrogen element and an iron element.

[Example 2-36: Carbon catalyst granule (2-36)] Carbon catalyst granules (2-36) were obtained by putting the carbon catalyst granules (2-35) obtained in Example 2-35 in a crucible made of alumina and heat-treating the carbon catalyst granules at 800°C for one hour under a nitrogen atmosphere by an electric furnace. The carbon catalyst granules (2-36) were spherical particles having an average particle diameter of 12 µm, and had a BET specific surface of 340 m²/g and a tap density of 0.24 g/cm³. Further, it was confirmed that the carbon catalyst granules include a nitrogen element and an iron element.

[Example 2-37: Carbon catalyst granule (2-37)] A mixture paste was manufactured by weighing and mixing the above-described iron phthalocyanine dispersion body (1), the Ketjen black dispersion body (2), and the carbon nano-tube dispersion body at a mass ratio of 1:0.8:0.2. Precursor granules having an average particle diameter of about 12 µm were obtained by spraying and drying this mixture paste under a 125°C atmosphere by using a mini-spray dryer ("B-290" manufactured by Nihon-Buchi K.K.). Carbon catalyst granules (2-37) were obtained by putting the aforementioned precursor granules in a crucible made of alumina and performing a carbonizing process for the precursor granules at 800°C for two hours under a nitrogen atmosphere by an electric furnace. The carbon catalyst granules (2-37) were spherical particles having an average particle diameter of 12 µm, and had a BET specific surface of 390 m²/g and a tap density of 0.29 g/cm³. Further, it was confirmed that the carbon catalyst granules include a nitrogen element and an iron element.

[Example 2-38: Carbon catalyst granule (2-38)] The carbon catalyst granules (2-37) obtained in Example 2-37 were brought into a slurry state in a concentrated hydrochloric acid again and the dissolved iron-derived components were thereby eluted. Then, after the slurry was left at a standstill so that the carbon catalyst granules were precipitated, the supernatant liquid was removed. The above-described process was repeated until the color of the supernatant liquid disappeared. Then, carbon catalyst granules (2-38) were obtained by filtering, water-washing, and drying the resultant substance. The carbon catalyst granules (2-38) were spherical particles having an average particle diameter of 12 µm, and had a BET specific surface of 350 m²/g and a tap density of 0.27 g/cm³. Further, it was confirmed that the carbon catalyst granules include a nitrogen element and an iron element.

[Example 2-39: Carbon catalyst granule (2-39)] Carbon catalyst granules (2-39) were obtained by putting the carbon catalyst granules (2-38) obtained in Example 2-38 in a crucible made of alumina and heat-treating the carbon catalyst granules at 800°C for one hour under a nitrogen atmosphere by an electric furnace. The carbon catalyst granules (2-39) were spherical particles having an average particle diameter of 12 µm, and had a BET specific surface of 390 m²/g and a tap density of 0.30 g/cm³. Further, it was confirmed that the carbon catalyst granules include a nitrogen element and an iron element.

[Example 2-40: Carbon catalyst granule (2-40)] A mixture paste was manufactured by weighing and mixing the above-described iron phthalocyanine dispersion body (2), the Ketjen black dispersion body (6), and the graphene nano-platelet dispersion body (2) at a mass ratio of 1:0.5:0.5. Precursor granules having an average particle diameter of about 10 µm were obtained by spraying and drying this mixture paste under a 125°C atmosphere by using a mini-spray dryer ("B-290" manufactured by Nihon-Buchi K.K.). Carbon catalyst granules (2-40) were obtained by putting the aforementioned precursor granules in a crucible made of alumina and performing a carbonizing process for the precursor granules at 800°C for two hours under a nitrogen atmosphere by an electric furnace. The carbon catalyst granules (2-40) were spherical particles having an average particle diameter of 10 µm, and had a BET specific surface of 80 m²/g and a tap density of 0.40 g/cm³. Further, it was confirmed that the carbon catalyst granules include a nitrogen element and an iron element.

[Example 2-41: Carbon catalyst granule (2-41)] The carbon catalyst granules (2-40) obtained in Example 2-40 were brought into a slurry state in a concentrated hydrochloric acid again and the dissolved iron-derived components were thereby eluted. Then, after the slurry was left at a standstill so that the carbon catalyst granules were precipitated, the supernatant liquid was removed. The above-described process was repeated until the color of the supernatant liquid disappeared. Then, carbon catalyst granules (2-41) were obtained by filtering, water-washing, and drying the resultant substance. The carbon catalyst granules (2-41) were spherical particles having an average particle diameter of 10 µm, and had a BET specific surface of 96 m²/g and a tap density of 0.41 g/cm³. Further, it was confirmed that the carbon catalyst granules include a nitrogen element and an iron element.

[Example 2-42: Carbon catalyst granule (2-42)] Carbon catalyst granules (2-42) were obtained by putting the carbon catalyst granules (2-41) obtained in Example 2-41 in a crucible made of alumina and heat-treating the carbon catalyst granules at 800°C for one hour under a nitrogen atmosphere by an electric furnace. The carbon catalyst granules (2-42) were spherical particles having an average particle diameter of 10 µm, and had a BET specific surface of 200 m²/g and a tap density of 0.44 g/cm³. Further, it was confirmed that the carbon catalyst granules include a nitrogen element and an iron element.

[Example 2-43: Carbon catalyst granule (2-43)] A mixture paste was manufactured by weighing and mixing the above-described cobalt phthalocyanine dispersion body and the Ketjen black dispersion body (3) at a mass ratio of 1:1. Precursor granules having an average particle diameter of about 10 µm were obtained by spraying and drying this mixture paste under a 125°C atmosphere by using a mini-spray dryer ("B-290" manufactured by Nihon-Buchi K.K.). Carbon catalyst granules (2-43) were obtained by putting the aforementioned precursor granules in a crucible made of alumina and performing a carbonizing process for the precursor granules at 750°C for two hours under a nitrogen atmosphere by an electric furnace. The carbon catalyst granules (2-43) were spherical particles having an average particle diameter of 10 µm, and had a BET specific surface of 210 m²/g and a tap density of 0.27 g/cm³. Further, it was confirmed that the carbon catalyst granules include a nitrogen element and a cobalt element.

[Example 2-44: Carbon catalyst granule (2-44)] The carbon catalyst granules (2-43) obtained in Example 2-43 were brought into a slurry state in a concentrated hydrochloric acid again and the dissolved iron-derived components were thereby eluted. Then, after the slurry was left at a standstill so that the carbon catalyst granules were precipitated, the supernatant liquid was removed. The above-described process was repeated until the color of the supernatant liquid disappeared. Then, carbon catalyst granules (2-44) were obtained by filtering, water-washing, and drying the resultant substance. The carbon catalyst granules (2-44) were spherical particles having an average particle diameter of 10 µm, and had a BET specific surface of 170 m²/g and a tap density of 0.30 g/cm³. Further, it was confirmed that the carbon catalyst granules include a nitrogen element and a cobalt element.

[Example 2-45: Carbon catalyst granule (2-45)] Carbon catalyst granules (2-45) were obtained by putting the carbon catalyst granules (2-44) obtained in Example 2-44 in a crucible made of alumina and heat-treating the precursor granules at 750°C for one hour under a nitrogen atmosphere by an electric furnace. The carbon catalyst granules (2-45) were spherical particles having an average particle diameter of 10 µm, and had a BET specific surface of 200 m²/g and a tap density of 0.28 g/cm³. Further, it was confirmed that the carbon catalyst granules include a nitrogen element and a cobalt element.

[Example 2-46: Carbon catalyst granule (2-46)] Precursor granules having an average particle diameter of about 10 µm were obtained by spraying and drying the above-described Ketjen black dispersion body (4) under a 125°C atmosphere by using a mini-spray dryer ("B-290" manufactured by Nihon-Buchi K.K.) and by using an SEM (Scanning Electron Microscope). Carbon catalyst granules (2-46) were obtained by putting the aforementioned precursor granules in a crucible made of alumina and performing a carbonizing process for the precursor granules at 700°C for one hour under a nitrogen atmosphere by an electric furnace. The carbon catalyst granules (2-46) were spherical particles having an average particle diameter of 10 µm, and had a BET specific surface of 240 m²/g and a tap density of 0.25 g/cm³. Further, it was confirmed that the carbon catalyst granules include a nitrogen element and a cobalt element.

[Example 2-47: Carbon catalyst granule (2-47)] Precursor granules having an average particle diameter of about 10 µm were obtained by spraying and drying the above-described Ketjen black dispersion body (4) under a 125°C atmosphere by using a mini-spray dryer ("B-290" manufactured by Nihon-Buchi K.K.) and by using an SEM (Scanning Electron Microscope). Carbon catalyst granules (2-47) were obtained by putting the aforementioned precursor granules in a crucible made of alumina and performing a carbonizing process for the precursor granules at 800°C for one hour under a nitrogen atmosphere by an electric furnace. The carbon catalyst granules (2-47) were spherical particles having an average particle diameter of 10 µm, and had a BET specific surface of 265 m²/g and a tap density of 0.25 g/cm³. Further, it was confirmed that the carbon catalyst granules include a nitrogen element and a cobalt element.

[Example 2-48: Carbon catalyst granule (2-48)] Precursor granules having an average particle diameter of about 10 µm were obtained by spraying and drying the above-described Ketjen black dispersion body (5) under a 125°C atmosphere by using a mini-spray dryer ("B-290" manufactured by Nihon-Buchi K.K.) and by using an SEM (Scanning Electron Microscope). Carbon catalyst granules (2-48) were obtained by putting the aforementioned precursor granules in a crucible made of alumina and performing a carbonizing process for the precursor granules at 800°C for one hour under a nitrogen atmosphere by an electric furnace. The carbon catalyst granules (2-48) were spherical particles having an average particle diameter of 10 µm, and had a BET specific surface of 300 m²/g and a tap density of 0.26 g/cm³. Further, it was confirmed that the carbon catalyst granules include a nitrogen element and a cobalt element.

<Measurement of sphericity> The sphericities of the carbon catalyst granules manufactured by the Examples were obtained by using an SEM (Scanning Electron Microscope) and were found to be 0.85 to 0.95.

### [Comparative Example 2-1: Carbon catalyst (2-49)]

A precursor was obtained by weighing iron phthalocyanine (manufactured by Sanyo Color Works, Ltd.) and Ketjen black (EC-300J manufactured by Lion Corporation) so that their weight ratio became 0.5:1, and dry-mixing them in a mortar. The above-described precursor powder was put in a crucible made of alumina and heat-treated at 700°C for two hours under a nitrogen atmosphere by an electric furnace. Then, a carbon catalyst (2-49) was obtained by pulverizing the obtained carbide in a mortar. The carbon catalyst (2-49) was indefinitely-shaped aggregated particles having an average particle diameter of 25 µm, and had a BET specific surface of 620 m²/g and a tap density of 0.08 g/cm³. Further, it was confirmed that the carbon catalyst includes a nitrogen element and an iron element.

### <Oxygen reduction activity evaluation of carbon catalyst granule>

The oxygen reduction activities of the carbon catalyst granules (2-1) to (2-48) obtained in Examples 2-1 to 2-48 and the carbon catalyst (2-49) obtained in Comparative Example 2-1 were evaluated by using electrodes that were obtained by dispersing these carbon catalysts on glassy carbon. The evaluation method was as follows.

### (1) Ink-forming method

Carbon catalyst ink was obtained by weighing 0.01 parts of carbon catalyst granules or a carbon catalyst, adding 3.56 parts of a mixed solution (solid content 0.19%) of water, propanol, and butanol with Nafion (manufactured by Du Pont) dispersed therein as a solid polymer catalyst, and then performing a dispersing process by ultrasound (45 Hz) for 15 minutes.

Then, (2) working electrode manufacture and (3) LSV (Linear Sweep Voltammetry) measurement were carried out in a similar manner to those for Example 1-1. Table 2-1 shows evaluation results.

As a standard sample, the oxygen reduction activity level of a carbon with platinum supported thereon (platinum carrying ratio 50 wt%) was evaluated by the above-described evaluation method. Its oxygen reduction start potential was 0.94V (vsRHE).

**[Table 2-1]**

| | Oxygen reduction start potential (V vs RHE) | | Oxygen reduction start potential (V vs RHE) |
|---|---|---|---|
| Example 2-1 | 0.74 | Example 2-25 | 0.77 |
| Example 2-2 | 0.77 | Example 2-26 | 0.79 |
| Example 2-3 | 0.77 | Example 2-27 | 0.8 |
| Example 2-4 | 0.73 | Example 2-28 | 0.81 |
| Example 2-5 | 0.76 | Example 2-29 | 0.82 |
| Example 2-6 | 0.77 | Example 2-30 | 0.83 |
| Example 2-7 | 0.75 | Example 2-31 | 0.74 |
| Example 2-8 | 0.77 | Example 2-32 | 0.76 |
| Example 2-9 | 0.78 | Example 2-33 | 0.76 |
| Example 2-10 | 0.73 | Example 2-34 | 0.74 |
| Example 2-11 | 0.76 | Example 2-35 | 0.76 |
| Example 2-12 | 0.76 | Example 2-36 | 0.76 |
| Example 2-13 | 0.73 | Example 2-37 | 0.76 |
| Example 2-14 | 0.75 | Example 2-38 | 0.77 |
| Example 2-15 | 0.76 | Example 2-39 | 0.8 |
| Example 2-16 | 0.76 | Example 2-40 | 0.78 |
| Example 2-17 | 0.79 | Example 2-41 | 0.79 |
| Example 2-18 | 0.8 | Example 2-42 | 0.79 |
| Example 2-19 | 0.77 | Example 2-43 | 0.73 |
| Example 2-20 | 0.79 | Example 2-44 | 0.76 |
| Example 2-21 | 0.79 | Example 2-45 | 0.77 |
| Example 2-22 | 0.8 | Example 2-46 | 0.74 |
| Example 2-23 | 0.81 | Example 2-47 | 0.72 |
| Example 2-24 | 0.82 | Example 2-48 | 0.76 |
| | | Comparative Example 2-1 | 0.73 |

As can be seen from Table 2-1, all of the carbon catalyst granules (2-1) to (2-48) synthesized by the manufacturing methods according to the Examples had a high oxygen reduction activity.

### [Manufacture of catalyst ink]

### (Examples 2-101 to 2-148: Catalyst inks (2-1) to (2-48), (Comparative Example 2-149: Catalyst ink (2-49))

Catalyst inks (2-1) to (2-49) (solid content concentration 20 mass%, the total ratio of the carbon catalyst, the binding material, and the binder as the amount of the catalyst ink was defined as 100 mass%) were manufactured by weighing 12 parts of the carbon catalyst granules and the carbon catalyst obtained in Examples 2-1 to 2-48 and Comparative Example 2-1, adding the weighed carbon catalyst granules and the carbon catalyst in a mixed solution of 48 parts of 1-batanole and 40 parts of a 20-mass% Nafion solution (a binder, manufactured by Du Pont, a solvent: water and 1-propanol), and stirring and mixing the mixture by using a disper (T.K homodisper manufactured by Primix Corporation).

### <Evaluation of catalyst ink>

The dispersing properties of catalyst inks were evaluated in a manner similar to that for Example 1-101. The particle sizes of the catalyst inks (2-1) to (2-48) of the Examples were all 20 to 30 µm and hence their dispersing properties were all excellent. In contrast to this, aggregated particles equal to or greater than 100 µm were observed in the catalyst ink (2-49) of the Comparative Example and hence its dispersing property was observed to be poorer.

Table 2-2 shows the compositions of catalyst inks and their dispersing property evaluation results.

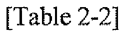

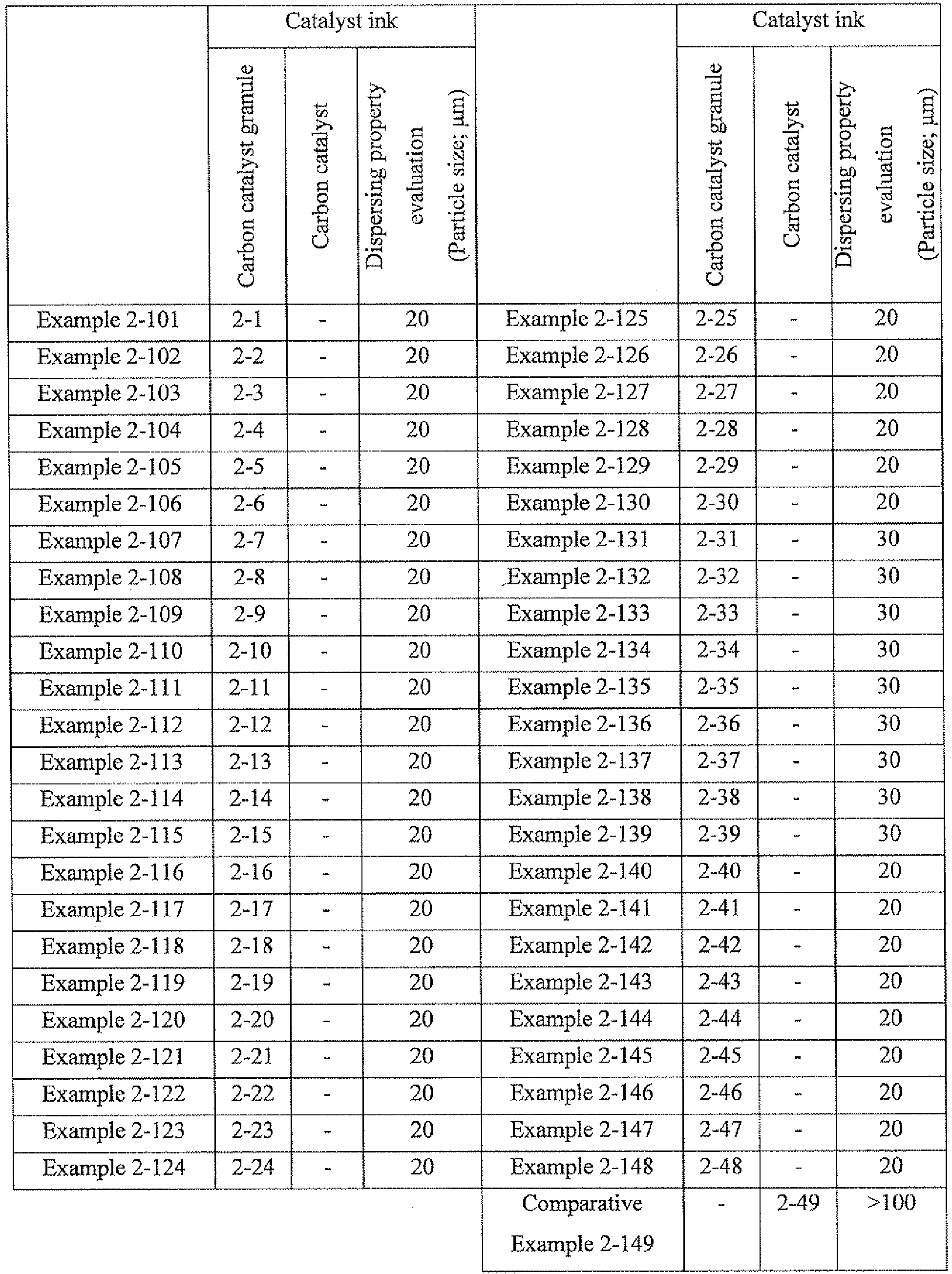

### <Manufacture of fuel cell cathode catalyst layer: Catalyst layer A>

Unevenness-free uniform fuel cell cathode catalyst layers were manufactured by using the catalyst inks of Examples 2-101 to 2-148 by a method similar to that for Example 1-101. However, with the catalyst ink of Comparative Example 2-149, an uneven crumbling layer was formed and the coating weight of the carbon catalyst could not reach the target value of 2 mg/cm² and was 1 mg/cm². This seems to be a result in which the particle properties of the carbon catalysts themselves were clearly reflected.

### <Manufacture of fuel cell cathode catalyst layer: Catalyst layer B>

Unevenness-free uniform fuel cell cathode catalyst layers were manufactured by using the catalyst inks of Examples 2-101 to 2-148 by a method similar to that for Example 1-101. However, with the catalyst ink of Comparative Example 2-149, an uneven crumbling layer was formed and the coating weight of the carbon catalyst could not reach the target value of 3 mg/cm² and was 1 mg/cm². This seems to be a result in which the particle properties of the carbon catalysts themselves were clearly reflected.

### <Coating property evaluation>

The coating properties were evaluated in a similar manner to that for Example 1-101. Table 2-3 shows evaluation results of the catalyst layer B. The evaluation results of the catalyst layer A were similar to those of the catalyst layer B

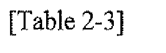

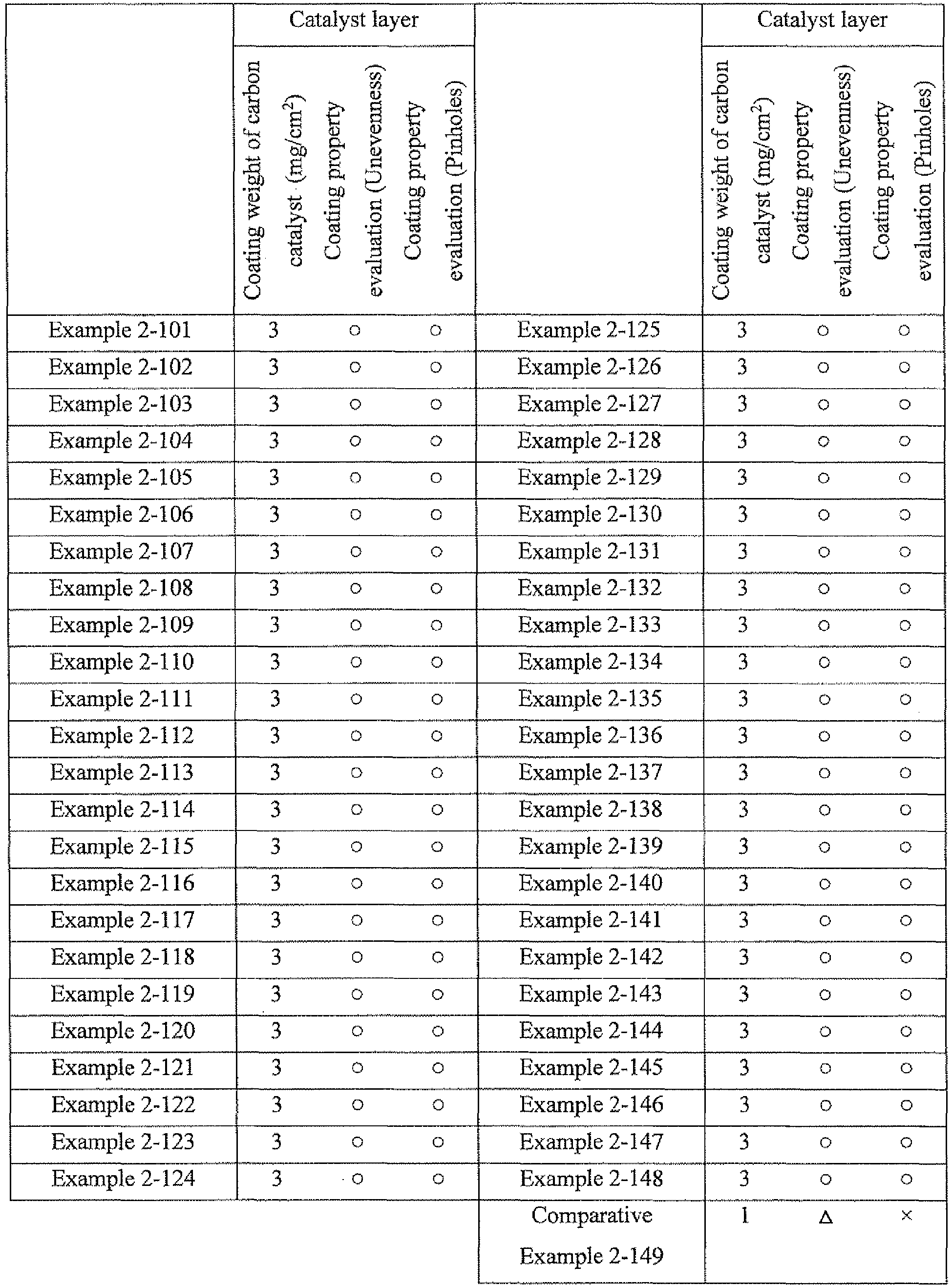

### <Manufacture of fuel cell membrane electrode assembly>

The obtained fuel cell cathode catalyst layer and the fuel cell anode catalyst layer used in Example 1-101 were stuck on respective surfaces (i.e., both surfaces) of a solid polymer electrolyte (Nafion 212 manufactured by Du Pont, film-thickness 50 µm). After the stuck body was pressed from both sides under a condition of 150°C and 5 MPa, the Teflon (registered trademark) film was removed. Then, a fuel cell membrane electrode assembly (GDL/catalyst layer/solid polymer electrolyte/catalyst layer/GDL) according to the present invention was manufactured by further stacking electrode base materials (gaseous diffusion layers GDLs, carbon paper made of carbon fibers, TGP-H-090 manufactured by Toray Industries, Inc.) on both sides of the stuck body.

In the fuel cell membrane electrode assemblies (GDL/catalyst layer/solid polymer electrolyte/catalyst layer/GDL) manufactured in Examples according to the present invention, uniform electrode films were formed in which neither cracking nor broken parts were present in the catalyst layers after the transcription. In contrast to this, fuel cell membrane electrode assemblies manufactured in Comparative Examples were in poor conditions in which cracking and broken parts were present in the catalyst layers after the transcription.

### <Manufacture of fuel cell (single cell)> Fuel cells (single cells) were manufactured in a similar manner to that for Example 1-101.

<Evaluation of fuel cell (single cell)> Cell characteristics of the manufactured single cells were evaluated by measuring current-voltage characteristics thereof. According to the results, in the case where the fuel cell catalyst layer A was used, the open-circuit voltages of the single cells manufactured in Examples were 0.7 to 0.8 V and the short-circuit current densities were 800 to 1,200 mA/cm². In contrast to this, the open-circuit voltage of the single cell manufactured in Comparative Example was 0.7 V and the short-circuit current density was 600 mA/cm², which was lower than those of Examples. Further, in the case where the fuel cell catalyst layer A was used, the open-circuit voltages of the single cells manufactured in Examples were 0.75 to 0.85 V and the maximum output densities were 0.2 to 0.3 W/cm². In contrast to this, the open-circuit voltage of the single cell manufactured in Comparative Example was 0.7 V and the maximum output density was 0.1 W/cm², which was lower than those of Examples.

Although exemplary embodiments according to the present invention have been explained above in detail, the present invention is not limited to the above-described exemplary embodiments. That is, various modifications can be made without departing from the scope of the present invention.

Further, the specification of the present application also discloses the below-shown invention.
[Supplementary note 1] A carbon catalyst granule comprising: a carbon catalyst (A) comprising a carbon element, a nitrogen element, and a base metal element as constituent elements; and a resin (B) comprising a hydrophilic functional group, the resin (B) comprising the hydrophilic functional group serving as a binding material, wherein an average particle diameter of the carbon catalyst granule is 0.5 to 100 µm.
[Supplementary note 2] The carbon catalyst granule described in Supplementary note 1, wherein the carbon catalyst (A) is obtained by mixing at least a carbon particle (D1) and a compound (E) comprising one type or two or more types of a nitrogen element and/or a base metal element and heat-treating the mixture, the type of at least one of the carbon material and the compound (E) is chosen so that the at least one of the carbon material and the compound (E) serves as a supply source for the nitrogen element of the carbon catalyst (A), and the type of the compound (E) is chosen so that the compound (E) serves as a supply source for the base metal element of the carbon catalyst (A).
[Supplementary note 3] The carbon catalyst granule described in Supplementary note 1 or 2, wherein the compound (E) is a phthalocyanine-based compound.
[Supplementary note 4] The carbon catalyst granule described in any one of Supplementary notes 1 to 3, wherein the hydrophilic functional group of the resin (B) is at least one functional group selected from a group consisting of a sulfonic acid group, a carboxylic acid group, a phosphoric acid group, and a hydroxyl group.
[Supplementary note 5] The carbon catalyst granule described in any one of Supplementary notes 1 to 4, wherein the resin (B) is a resin having proton conductivity.
[Supplementary note 6] The carbon catalyst granule described in any one of Supplementary notes 1 to 5, further comprising a hydrophilic oxide particle (C).
[Supplementary note 7] The carbon catalyst granule described in Supplementary note 6, wherein the hydrophilic oxide particle (C) is an oxide including at least one element selected from a group consisting of Al, Si, Ti, Sb, Zr and Sn.
[Supplementary note 8] A carbon catalyst granule comprising a carbon element, a nitrogen element, and a base metal element as constituent elements, wherein the carbon catalyst granule is a sintered body having an average particle diameter of 0.5 to 100 µm, and the carbon element is derived from at least a carbon particle (D1).
[Supplementary note 9] The carbon catalyst granule described in Supplementary note 8, wherein a BET specific surface of the carbon catalyst granule is 20 to 2,000 m²/g.
[Supplementary note 10] The carbon catalyst granule described in Supplementary note 8 or 9, wherein a tap density of the carbon catalyst granule is 0.1 to 2.0 g/cm³.

This application is based upon and claims the benefit of priorities from Japanese patent applications No. 2012-170875 and No. 2013-084598, filed on August 1, 2012 and April 15, 2013, respectively, the disclosures of which are incorporated herein in their entireties by reference.

### Industrial Applicability

Carbon catalyst granules according to the present invention are suitable for the anode catalyst layers and/or the cathode catalyst layers of polymer electrolyte fuel cells. Further, carbon catalyst granules according to the present invention are also suitable for catalyst ink, electrode materials for cells including various fuel cells, electrode catalysts, and electrode materials for various electronic components. Further, the carbon catalyst granules according to the present invention are also suitable for other uses such as metal-air cell electrode catalysts, catalysts for exhaust gas purification, and catalysts for water treatment purification.

### Reference Signs List

- 1: SEPARATOR
- 2: GASEOUS DIFFUSION LAYER
- 3: ANODE ELECTRODE CATALYST (FUEL ELECTRODE)
- 4: SOLID POLYMER ELECTROLYTE
- 5: CATHOODE ELECTRODE CATALYST (AIR ELECTRODE)
- 6: GASEOUS DIFFUSION LAYER
- 7: SEPARATOR

## Claims

1. A cell catalyst composition comprising a carbon catalyst granule and a binder resin,
wherein
at least a part of the binder resin comprises a resin (B) comprising a hydrophilic functional group,
the carbon catalyst granule is:
(i) a carbon catalyst granule wherein a plurality of carbon catalyst (A) particles are bound to each other by using at least the resin (B); or/and
(ii) a carbon catalyst granule wherein a plurality of carbon catalyst (A) particles form a sintered body and are thereby bound to each other,
the carbon catalyst (A) comprises a carbon element, a nitrogen element, and a base metal element as constituent elements,
an average particle diameter of the carbon catalyst granule is 0.5 to 100 µm, and
a sphericity of the carbon catalyst granule is equal to or greater than 0.5.

2. The cell catalyst composition according to Claim 1, wherein a tap density of the carbon catalyst granule is 0.1 to 2.5 g/cm³.

3. The cell catalyst composition according to Claim 1 or 2, wherein
the carbon catalyst (A) is obtained by mixing and heat-treating one type or two or more types of a carbon material and one type or two or more types of compound (E),
the carbon material is at least one material selected from a group consisting of carbon particles derived from an inorganic carbon material and an organic material that becomes carbon particles by a heat-treatment,
the compound (E) is a compound comprising a nitrogen element and/or a base metal element,
the type of at least one of the carbon material and the compound (E) is chosen so that the at least one of the carbon material and the compound (E) serves as a supply source for the nitrogen element of the carbon catalyst (A), and
the type of the compound (E) is chosen so that the compound (E) serves as a supply source for the base metal element of the carbon catalyst (A).

4. The cell catalyst composition according to Claim 3, wherein the compound (E) is a complex or a salt comprising a base metal element.

5. The cell catalyst composition according to Claim 3, wherein the compound (E) is at least one compound selected from a phthalocyanine-based compound, a naphthalocyanine-based compound, a porphyrin-based compound, and a tetra-azaannulene-based compound.

6. The cell catalyst composition according to Claim 3, wherein the compound (E) is a phthalocyanine-based compound.

7. The cell catalyst composition according to any one of Claims 1 to 6, wherein a BET specific surface of the carbon catalyst granule obtained in the Item (ii) is 20 to 2,000 m²/g.

8. The cell catalyst composition according to any one of Claims 1 to 7, wherein the hydrophilic functional group of the resin (B) is at least one functional group selected from a group consisting of a sulfonic acid group, a carboxylic acid group, a phosphoric acid group, and a hydroxyl group.

9. The cell catalyst composition according to any one of Claims 1 to 8, wherein the resin (B) is a resin having proton conductivity.

10. The cell catalyst composition according to any one of Claims 1 to 9, further comprising a hydrophilic oxide particle (C).

11. The cell catalyst composition according to Claim 10, wherein the hydrophilic oxide particle (C) is an oxide comprising at least one element selected from a group consisting of Al, Si, Ti, Sb, Zr and Sn.

12. The cell catalyst composition according to any one of Claims 1 to 11, used for catalyst ink.

13. The cell catalyst composition according to Claim 12, further comprising a disperser.

14. An electrode material comprising a cell catalyst composition according to any one of Claims 1 to 11.

15. A fuel cell comprising a solid polymer electrolyte, and a pair of electrode units that hold the solid polymer electrolyte therebetween, wherein
a cell catalyst composition according to any one of Claims 1 to 11 is disposed as an electrode catalyst in a place where the cell catalyst composition is in contact with the solid polymer electrolyte of at least one of the pair of electrode units.

16. A manufacturing method of a cell catalyst composition comprising a carbon catalyst granule and a binder resin, wherein
at least a part of the binder resin comprises a resin (B) comprising a hydrophilic functional group,
the carbon catalyst granule is formed by either one of:
(I) a granulating method wherein: a carbon catalyst (A) is obtained by mixing a carbon material with a compound (E) and then heat-treating the mixture; and the obtained carbon catalyst (A) is wet-mixed with at least the resin (B) and then the mixture is sprayed and dried; and
(II) a method wherein a carbon material is wet-mixed with a compound (E) and then sprayed and dried for granulation, and the granulated particles are heat-treated to obtain the carbon catalyst (A),
the carbon catalyst (A) comprises a carbon element, a nitrogen element, and a base metal element as constituent elements,
the carbon material is at least one material selected from a group consisting of carbon particles derived from an inorganic carbon material and an organic material that becomes carbon particles by a heat-treatment,
the compound (E) is a compound comprising one type or two or more types of a nitrogen element and/or a base metal element,
the type of at least one of the carbon material and the compound (E) is chosen so that the at least one of the carbon material and the compound (E) serves as a supply source for the nitrogen element of the carbon catalyst (A), and
the type of the compound (E) is chosen so that the compound (E) serves as a supply source for the base metal element of the carbon catalyst (A).

17. The manufacturing method of a cell catalyst composition according to Claim 16, wherein the resin (B) is a resin having proton conductivity.

18. The manufacturing method of a cell catalyst composition according to Claim 16 or 17, wherein the compound (E) is a complex or a salt comprising a base metal element.

19. The manufacturing method of a cell catalyst composition according to any one of Claims 16 to 18, wherein the granulation process by the wet-mixing and the spraying and drying is performed under presence of a disperser.
